(19) Europäisches Patentamt
European Patent Office
Office européen des brevets

(11) Veröffentlichungsnummer: **0 233 139**
**B1**

(12) # EUROPÄISCHE PATENTSCHRIFT

(45) Veröffentlichungstag der Patentschrift: **16.01.91**

(51) Int. Cl.[5]: **C 09 B 62/503,** D 06 P 1/384

(21) Anmeldenummer: **87810002.3**

(22) Anmeldetag: **06.01.87**

(54) **Reaktivfarbstoffe, deren Herstellung und Verwendung.**

(30) Priorität: **10.01.86 CH 88/86**

(43) Veröffentlichungstag der Anmeldung:
**19.08.87 Patentblatt 87/34**

(45) Bekanntmachung des Hinweises auf die Patenterteilung:
**16.01.91 Patentblatt 91/03**

(84) Benannte Vertragsstaaten:
**BE CH DE FR GB IT LI**

(56) Entgegenhaltungen:
**EP-A-0 074 928**
**EP-A-0 141 367**
**EP-A-0 144 766**
**EP-A-0 159 292**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Tzikas, Athanassios, Dr.**
**Muttenzerstrasse 78**
**CH-4133 Pratteln (CH)**

**EP 0 233 139 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue Reaktivfarbstoffe, Verfahren zu deren Herstellung und deren Verwendung zum Fäbren oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern.

Es sind bereits z.B. aus der EP—A—0 074 928 Reaktivfarbstoffe der Formel

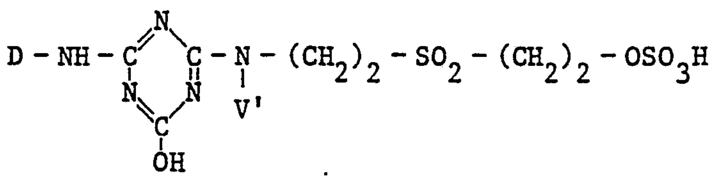 ,

worin D ein organischer Farbstoffrest und V′ Wasserstoff oder ein Rest $—(CH_2)_2—SO_2—(CH_2)_2—OSO_3H$ ist, bekannt; diese vermögen jedoch die genannten Anforderungen nur in ungenügendem Masse zu erfüllen.

Der vorliegende Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen faserreaktiven Farbstoffen die gestellte aufgabe gelöst wird.

Gegenstand der Erfindung sind Reaktivfarbstoffe der Formel

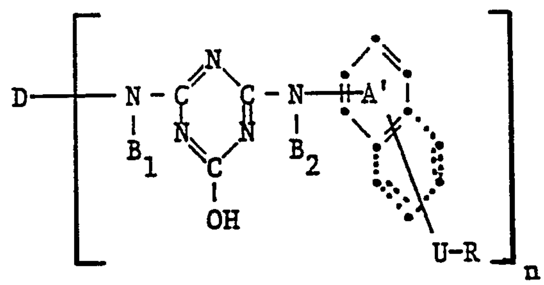 (4) ,

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes; $B_1$ und $B_2$ unabhängig voneinander Wasserstoff oder Alkyl mit 1 bis 4 Kohlenstoffatomen, das durch Carboxy, Sulfo, Cyan oder Hydroxy substituiert sein kann; U —CO— oder $—SO_2—$; R ein Rest der Formel

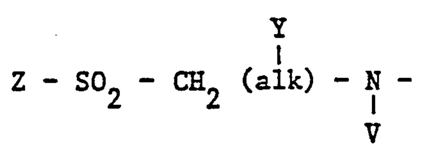 (5a) ,

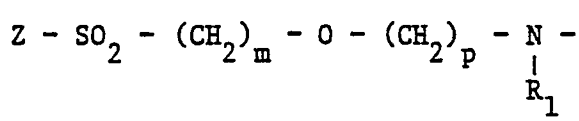 (5b) ,

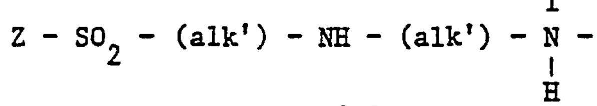 (5c)

oder

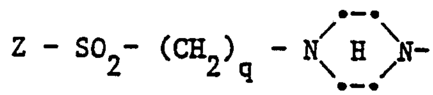 (5d)

ist, Z β-Sulfatöathyl, β-Thiosulfatoäthyl, β-Phosphatoäthyl, β-Acetoxyäthyl, β-Halogenäthyl oder Vinyl; alk ein Polymethylenrest mit 1 bis 6 C-Atomen oder dessen verzweigte Isomere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein rest $—SO_2—Z$, worin Z die oben angegebene Bedeutung hat; V Wasserstoff oder ein Alkylrest mit 1 bis 4 C-Atomen, der durch Carboxy- oder Sulfogruppen, Alkoxygruppen mit 1 oder 2 C-Atomen, Halogen oder Hydroxy substituiert sein kann; oder ein Rest

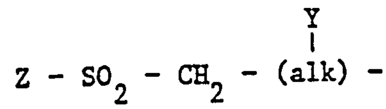

worin Z, alk und Y die angegebenen Bedeutungen haben; $R_1$ Wasserstoff oder $C_{1-6}$-Alkyl; alk' unabhängig voneinander Polymethylenreste mit 2 bis 6 C-Atomen oder deren verzweigte Isomere; $n = 1$ oder 2, $m = 1$ bis 6, $p = 1$ bis 6 und $q = 1$ bis 6 ist; wobei falls U $—SO_2—$ ist, V nicht Wasserstoff sein darf; und der Benzol- bzw. Naphthalinrest A' weitere Substituenten enthalten kann, sowie Reaktivfarbstoffe der Formel

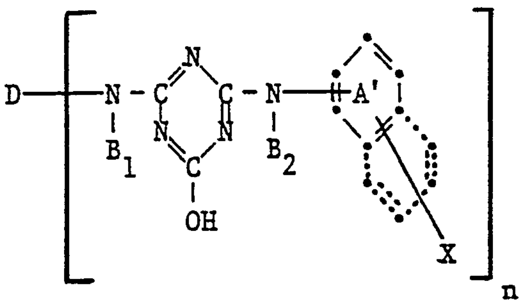

(6) ,

worin $B_1$, $B_2$ und n die oben angegebene Bedeutung haben; X ein Rest der Formel

$$—SO_2—Z \qquad (2)$$

oder

$$—N(R_1)SO_2—Z \qquad (2a);$$

und $R_1$ Wasserstoff oder $C_{1-6}$-Alkyl ist; Z die oben angegebene Bedeutung hat, und der Benzol- bzw. Naphthalinrest A' ausser X weitere Substituenten enthalten kann.

Der Rest D in Formel (4) und (6) kann an seinem Grundgerüst die bei organischen Farbstoffen üblichen Substituenten gebunden enthalten.

Als Beispiele für weitere Substituenten im Rest D seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen imAlkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (4) und (6), worin D der Rest eines Azofarbstoffes ist, enthalten als Substituenten vor allem Methyl, Aethyl, Methoxy, Aethoxy, Acetylamino, Benzoylamino, Amino, Chlor, Brom, Ureido, Hydroxy, Carboxy, Sulfomethyl oder Sulfo.

Der Rest $B_1$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, Carboxy oder Sulfo. Als Beispiele für $B_1$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $B_1$ Wasserstoff, Methyl oder Aethyl.

Der in eckige Klammern eingeschlossene Teil von Formel (4) und (6) ist ein Reaktivrest, welcher ein- oder zweimal im Molekül vorhanden sein kann; beide Formelvarianten sind gleich wichtig. Falls $n = 2$ ist, können die beiden Reaktivreste gleich oder verschieden sein; vorzugsweise sind beide Reste gleich. Der

Reaktivrest enthält mindestens einen Substituenten der Formel (2), welcher eine faserreaktive Abgangsgruppe aufweist, z.B. wenn Z β-Chloräthyl ist, oder die nach Art von faserreaktiven Abgangsgruppen wirksam werden können, z.B. falls Z Vinyl ist. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Ferner sind in Betracht zu ziehen, Reaktivfarbstoffe der Formel (4) und (6), worin der Rest D noch einen weiteren Reaktivrest einschliesst. Die zusätzlichen, in D eingeschlossenen Reaktivreste können über Aminogruppen, oder in anderer Weise z.B. durch eine direkte Bindung an D gebunden sein.

Für den Substituenten $B_2$ gelten die gleichen Erläuterungen wir für $B_1$. Als weitere Substituenten am Benzol- bzw. Naphthalinrest A' kommen die gleichen in Betracht, die weiter oben bei der Erläuterung des Restes D genannt sind.

Bevorzugte Ausführungsformen der Reaktivfarbstoffe der Formel (4) und (6) sind:

a) Reatkivfarbstoffe der Formel

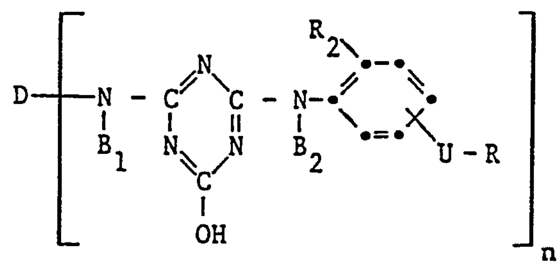

(8) ,

worin $R_2$ Wasserstoff, $C_{1-4}$-Alkyl, $C_{1-4}$-Alkoxy, Halogen, Hydroxy, Carboxy oder Sulfo ist; und D, $B_1$, $B_2$, U, R und n die unter Formel (4) angegebenen Bedeutungen haben.

b) Reaktivfarbstoffe gemäss a), worin D der Rest eines Mono- oder Disazofarbstoffes ist.

c) Reaktivfarbstoffe gemäss a), worin D der Rest eines Metallkomplexazo- oder Formanzanfarbstoffes ist.

d) Reaktivfarbstoffe gemäss a), worin D der Rest eines Anthrachinonfarbstoffes ist.

e) Reaktivfarbstoffe gemäss a), worin D der Rest eines Phthalocyaninfarbstoffes ist.

f) Reaktivfarbstoffe gemäss c), worin D der Rest eines 1:1-Kupferkomplexazofarbstoffes der Benzol- oder Naphthalinreihe ist, un das Kupferatom an je eine metallisierbare Gruppe beidseitig in ortho-Stellung zur Azobrücke gebunden ist.

g) Reaktivfarbstoffe gemäss b) oder c), worin D ein Mono- oder Diazofarbstoffrest der Formel

$$D_1—N=N—(M—N=N)_q—K— \quad (9a),$$

$$—D_1—N=N—(M—N=N)_q—K \quad (9b),$$

$$\text{oder } —D_1—N=N—(M—N=N)_q—K— \quad (9c),$$

oder eines davon abgeleiteten Metallkomplexes; $D_1$ der Rest einer Diazokomponente der Benzol- oder Naphthalinreihe, M der Rest einer Mittelkomponente der Benzol- oder Naphthalinreihe, und K der Rest einer Kupplungskomponente Benzol-, Napthalin-, Pyrazolon-, 6-Hydroxypyridon-(2)- oder Acetessigsäurearylamid-Reihe ist, wobei $D_1$, M und K bei Azofarbstoffen übliche Substituenten, insbesondere Hydroxy-, Amino-, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; q = 0 oder 1 ist; und $D_1$, M und K zusammenmindestens zwei Sulfogruppen, vorzugsweise drei oder vier Sulfogruppen, enthalten.

h) Reaktivfarbstoffe gemäss b), worin D ein Disazofarbstoffrest der Formel

$$D_1—N=N—K—N=N—D_2— \quad (10a),$$

$$\text{oder } —D_1—N=N—K—N=N—D_2— \quad (10b),$$

$D_1$ und $D_2$ unabhängig voneinander der Rest einer Diazokomponente der Benzol- oder Naphthalinreihe, und K der Rest einer Kupplungskomponente der Naphthalinreihe ist; wobei $D_1$, $D_2$ und k bei Azofarbstoffen übliche Substituenten, insbesondere Hydroxy-, Amino, Methyl-, Aethyl-, Methoxy- oder Aethoxygruppen, gegebenenfalls substituierte Alkanoylaminogruppen mit 2 bis 4 C-Atomen, gegebenenfalls substituierte Benzoylaminogruppen oder Halogenatome, tragen können; und $D_1$, $D_2$ und K zusammen mindestens zwei Sulfogruppen, vorzugsweise drei oder vier Sulfogruppen enthalten.

i) Reaktivfarbstoffe gemäss d), worin D der Rest eines Anthrachinonfarbstoffes der Formel

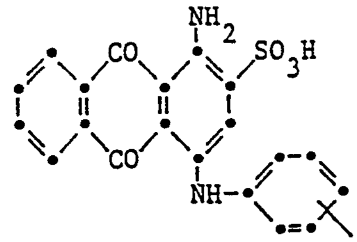

(11)

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 stark wasserlöslichmachende Gruppen enthält.

j) Reaktivfarbstoffe gemäss e), worin D der Rest eines Phthalocyaninfarbstoffes der Formel

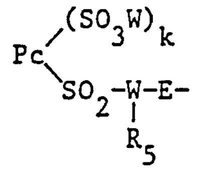

(12) ,

Pc der Rest eines Kupfer- oder Nickelphthalocyanins; W —OH und/oder —$NR_3R_4$; $R_3$ und $R_4$ unabhängig voneinander Wasserstoff oder Alkyl mit 1 bis 4 Kolenstoffatomen, das durch Hydroxy oder Sulfo substituiert sein kann; $R_5$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

Bevorzugt sind insbesondere:

k) Reaktivfarbstoffe gemäss g), der Formel

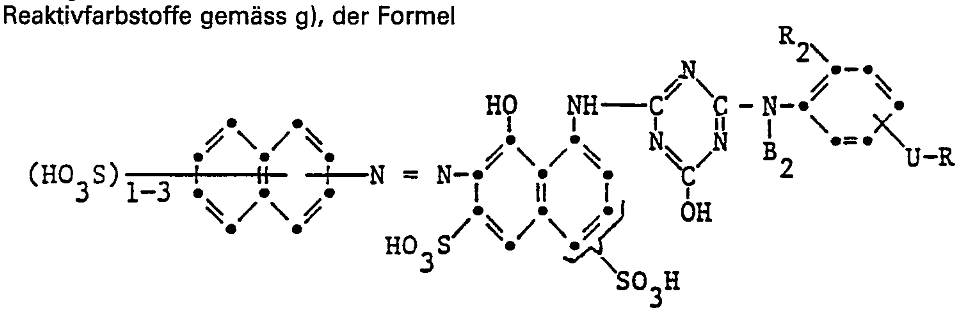

(16) ,

worin $B_2$, U, R und $R_2$ die für a) geltenden Bedeutungen haben.

l) Reaktivfarbstoffe gemäss g), der Formel

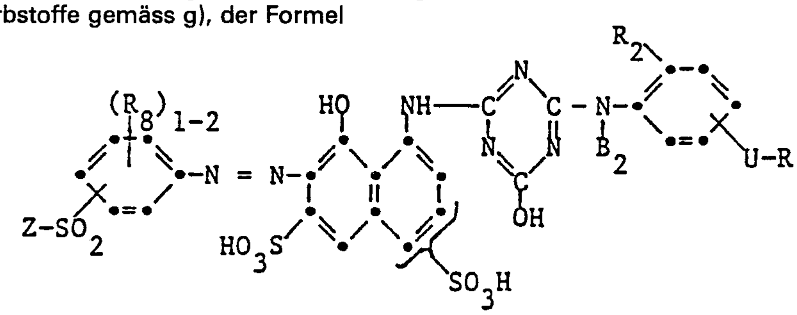

(17) ,

worin $R_8$ für 1 bis 2 Substituenten aus der Gruppe Wasserstoff, $C_{1-4}$-Alkyl, $C_{1-4}$-Alkoxy, Halogen, Carboxy und Sulfo steht; $B_2$, U, R und $R_2$ die für a) geltenden Bedeutungen haben, und Z β-Sulfatoäthyl, β-Thiosulfatoäthyl, β-Phosphatoäthyl, β-Acetoxyäthyl, β-Halogenäthyl oder Vinyl ist.

m) Reaktivfarbstoffe gemäss g), der Formel

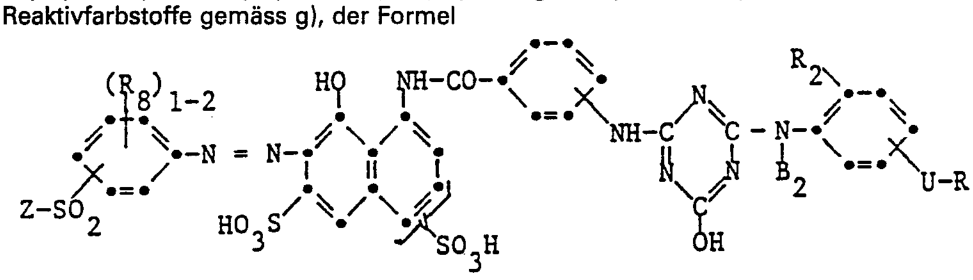

(18) ,

worin $R_8$ für 1 bis 2 Substituenten aus der Gruppe Wasserstoff, $C_{1-4}$-Alkyl, $C_{1-4}$-Alkoxy, Halogen, Carboxy und Sulfo steht; $B_2$, U, R und $R_2$ die für a) geltenden Bedeutungen haben, und Z β-Sulfatoäthyl, β-Thiosulfatoäthyl, β-Phosphatoäthyl, β-Acetoxyäthyl, β-Halogenäthyl oder Vinyl ist.

n) Reaktiverfarstoffe gemäss g), der Formel

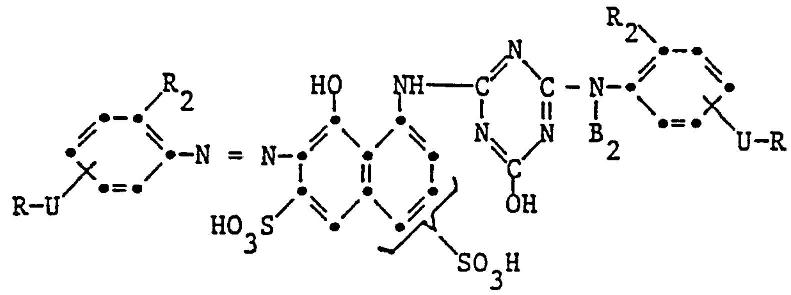

(19),

worin $B_2$, U, R und $R_2$ die für a) geltenden Bedeutungen haben.

o) Reaktivfarbstoffe gemäss g), der Formel

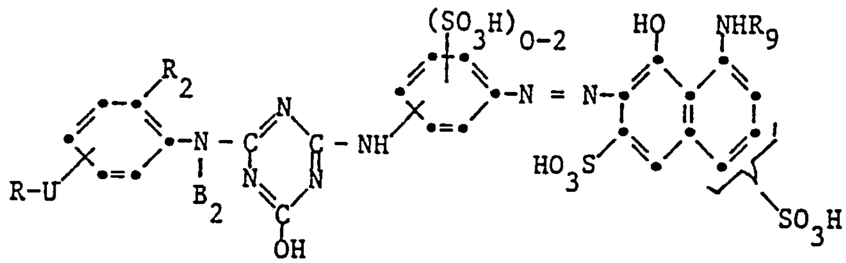

(20),

worin $R_9$ Wasserstoff, $C_{1-4}$-Alkanoyl oder Benzoyl ist; und $B_2$, U, R und $R_2$ die für a) geltenden Bedeutungen haben,

p) Reaktivfarbstoffe gemäss k) bis o), worin —U—R ein Rest der Formel

$$—CO—NH(CH_2)_2SO_2(CH_2)_2Cl$$

ist.

q) Reaktivfarbstoffe der Formel

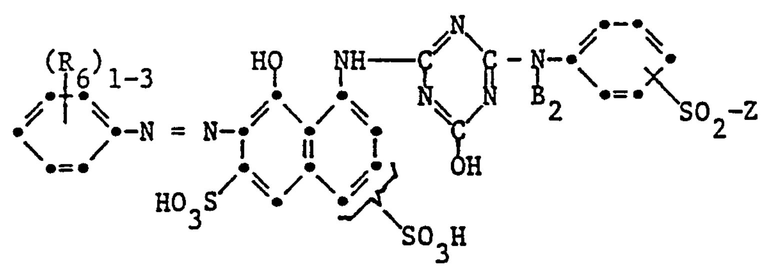

(26),

worin $R_6$ für 1 bis 3 Substituenten aus der Gruppe $C_{1-4}$-Alkyl, $C_{1-4}$-Alkoxy, Halogen, Carboxy und Sulfo steht; und $B_2$ und Z die für a) geltenden Bedeutungen haben.

r) Reaktivfarbstoffe der Formel

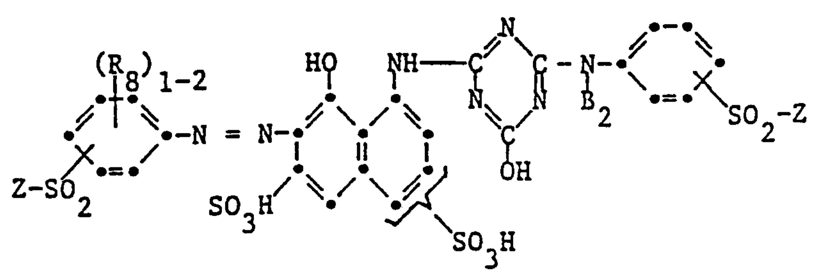

(27),

worin $R_8$ für 1 bis 2 Substituenten aus der Gruppe Wasserstoff, $C_{1-4}$-Alkyl, $C_{1-4}$-Alkoxy, Halogen, Carboxy und Sulfo steht; und $B_2$ und Z die für a) geltenden Bedeutungen haben.

s) Reaktivfarbstoffe der Formel

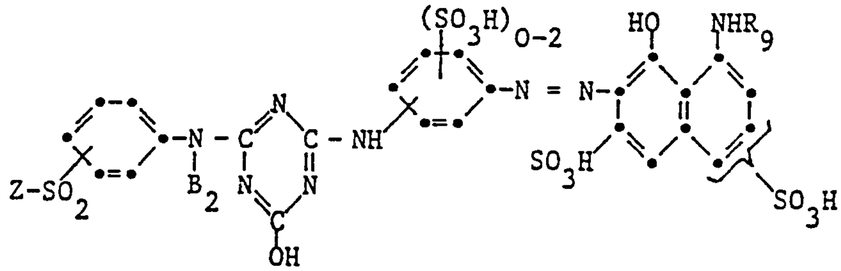

(28) ,

worin $R_9$ Wasserstoff $C_{1-4}$-Alkyl oder Benzoyl ist; und $B_2$ und Z die für a) geltenden Bedeutungen haben.

t) Reaktivfarbstoffe gemäss q) bis s), worin Z die β-Sulfatoäthyl-, β-Chloräthyl- oder Vinylgruppe ist.

u) Schwermetallkomplexe von Reaktivfarbststoffen gemäss k) bis p); als komplexbildende Schwermetalle kommen vor allem Kupfer, Nickel, Kobalt oder Chrom in Betracht.

Man erhält die Reaktivfarbstoffe der Formel (1), indem man einen organischen Farbstoff der Formel

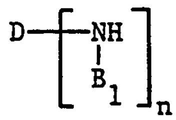

(29)

oder ein Farbstoffvorprodukt, mindestens ein Aequivalent eines s-Triazins der Formel

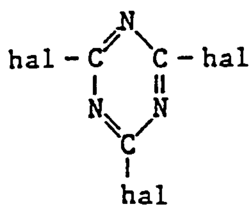

(30) ,

und mindestens ein Aequivalent eines Amines der Formel

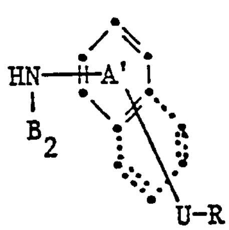

(38) oder

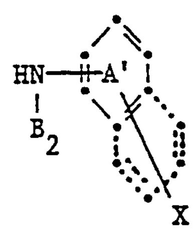

(39)

in beliebiger Folge miteinander umsetzt, wobei A', $B_1$, $B_2$, D, R, U, X und n jeweils die zuvor angegebenen Bedeutungen haben, und hal ein Halogenatom ist, und das nicht umgesetzte Halogenatom am Triazinring mittels Verseifung durch eine Hydroxygruppe ersetzt, oder, im Falle der Verwendung von Farbstoffvorprodukten, die erhaltenen Zwischenprodukte in die gewünschten Monohalogentriazinfarbstoffe überführt und das Halogenatom am Triazinring mittels Verseifung durch eine Hydroxygruppe ersetzt, und gegebenenfalls eine weitere Umwandlungsreaktion anschliesst.

Das molare Verhältnis der Ausgangsstoffe muss der Zusammensetzung des Endprodukts entsprechend gewählt werden, je nachdem ob n = 1 oder 2 ist.

Gegebenenfalls wird an das erfindungsgemässe Verfarhen eine weitere Umwandlungsreaktion angeschlossen. Bei der Herstellung der Endfarbstoffe aus Vorprodukten handelt es sich vor allem um Kupplungen, die zu Azofarbstoffe führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Ein wichtiges Verfahren ist dadurch gekennzeichnet, dass mann einen Farbstoff der Formel

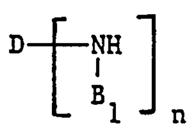

(29)

zunächst mit einem s-Triazin der Formel

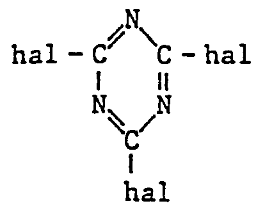

(30)

kondennsiert, und die erhaltene Verbindung der Formel

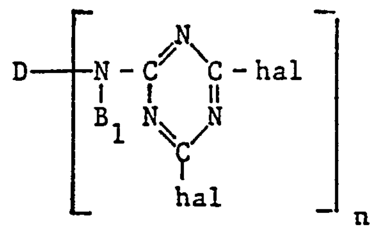

(32) ,

anschliessend mit einem Amin der zuvor angegebenen Formel (38) oder (39) kondensiert, und zuletzt das dritte Halogenatom am Traizinring durch eine Hydroxygruppe ersetzt.

Nach einem abgeänderten Verfahren können Reaktivfarbstoffe der Formel (4) und (6) hergestellt werden, indem man eine Komponente des Farbstoffes der Formel (4) oder (6), die einen Rest der Formel

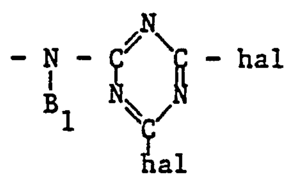

(33)

enthält, worin $B_1$ und hal die angegebenen Bedeutungen haben, mit einer zur Herstellung des Farbstoffs benötigten zweiten Komponente, die gegebenenfalls einen Rest der Formel (33) enthält, umsetzt, und den so erhaltenen Farbstoff der Formel

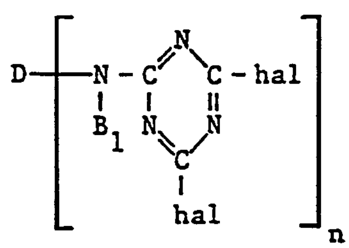

(32)

mit einem Amin der zuvor angegebenen Formel (38) oder (39) kondensiert, und das dritte Halogenatom am Triazinring durch eine Hydroxygruppe ersetzt.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist. Welche Reaktion bei der Herstellung eines sekundären Kondensationsproduktes aus einer Verbindung der Formel (38) bzw (39), dem Triazin der Formel (30) und dem organischen Farbstoff der Formel (29) oder einem Vorprodukt zweckmässigerweise zuerst ausgeführt wird, die des Triazins mit der Verbindung der Formel (38) bzw. (39) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Als Halogenatome hal im Triazin der Formel (30) kommen Fluor, Chlor oder Brom in Betracht; vorzugsweise ist hal Fluor. Der Ersatz des dritten Halogenatoms am Triazinring durch eine Hydroxygruppe erfolgt in letzter Stufe des Verfahrens durch Hydrolyse, vorzugsweise in wässriger, stark saurer Lösung und bei erhöhter Temperatur. Zur Einstellung des sauren pH-Wertes, etwa 2 bis 5, wird vorzugsweise eine starke Mineralsäure, wie Salzsäure oder Schwefelsäure, verwendet.

Eine abgewandelte Ausführungsform des Verfahrens besteht darin, zunächst einen Farbstoff herzustellen, der eine des Reaktivrestes enthält, und diese nachträglich in die Endstufe umzuwandeln, z.B. durch Veresterung oder eine Additionsreaktion. Beispielsweise kann man einen Farbstoff, worin Z ein Rest

HO—$CH_2CH_2$— ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Z die Gruppe $H_2C{=}CH$— ist, und lagent an das Zwischenprodukt Thioschwefelsäure an, wobei ein Rest $HO_3SS$—$CH_2CH_2$— entsteht.

Die Sulfatierung der Hydroxygruppe in einem Farbstoff der Formel (4) oder (6) oder einem geeigneten Vorprodukt, erfolgt z.B. durch Umsetzung mit konzentrierter Schwefelsäure bei 0°C bis mässig erhohter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfateirung durch Eintragen der betreffenden Verbindung in Schwefelsäuremonohydrat bei Temperaturen zwischen 5 und 15°C. Die Einführung eines anderen unter alkalischen Bedingungen abspaltbaren Restes in eine Verbindung der Formel (4) oder (6) oder ein Zwischenprodukt anstelle der Sulfatogruppe, beispielsweise einer Thiosulfatogruppe erfolgt in an sich bekannter Weise. Der Weg der Herstellung über eine Zwischenstufe anstelle der Sulfatogruppe, beispielsweise einer Thiosulfatogruppe erfolgt in an sich bekannter Weise. Der Weg der Herstellung über eine Zwischenstufe des Reaktivrestes geht in vielen Fällen einheitlich und vollständig.

Die Verfahrensvariante, bei welcher man von Farbstoffvorprodukten ausgeht, ist geeignet zur Herstellung von Reaktivfarbstoffen der Formel (4) oder (6), worin D der Rest eines aus zwei oder mehr als zwei Komponenten zusammengesetzte Farbstoffe sind: Monoazo-, Disazo-, Trisazo, Metallkomplexazo-, Formazan- und Azomethinfarbstoffe. Grundsätzlich lassen sich die Reaktivfarbstoffe der Formel (4) und (6) sämtlicher Farbstoffklassen in an sich bekannter Weise oder analog zu bekannten Verfahrensweisen herstellen, indem man von Vorproudkten oder Zwischenprodukten für Farbstoffe, die faserreaktive Reste gemäss Formel (4) oder (6) enthalten, ausgeht, oder diese faserreaktiven Reste in hierfür geeignete Zwischenprodukte mit Farbstoffcharakter einführt.

Bevorzugt sind Reaktivfarbstoffe der Formel (4) und (6), worin D der Rest eines Mono- oder Disazofarbstoffes oder eines Metallkomplexazofarbstoffes ist. In diesem Falle sind die Reaktivreste der Formel

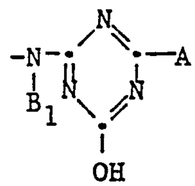 (34),

worin A der Rest einer Verbindung der zuvor angegebenen Formel (38) oder (39) ist, an die Diazo- oder Kupplungskomponente, oder, falls $n = 2$ ist, an verschiedene oder gleiche Reste von Ausgangskomponenten, d.h. Diazo- oder Kupplungskomponenten, gebunden. Vorzugsweise sind, für den Fall, dass $n = 2$ ist, die beiden Reaktivreste an je eine Komponente, Diazokomponente oder Kupplungskomponente, gebunden. Die Reaktivfarbstoffe haben dann z.B. die Formeln

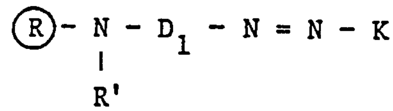 (35)

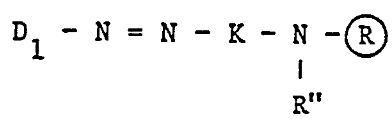 (36)

und

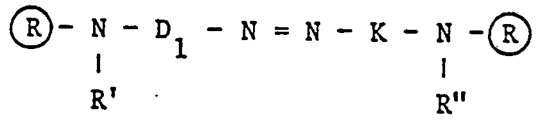 (37)

worin R′ und R″ unabhängig voneinander die gleiche Bedeutung haben wie $B_1$ in der Formel (4), $D_1$ der Rest einer Diazokomponente, und K der Rest einer Kupplungskomponente ist, und Ⓡ einen Reaktivrest der Formel (34) bedeutet. In Betracht zu ziehen sind auch Reaktivfarbstoffe der Formeln (35) bis (37), worin der rest $D_1$ und/oder K noch einen weiteren Reaktivrest einschliesst, so dass auch tri- und höher-reaktive Farbstoffe umfasst sind. Die zusätzlichen, in $D_1$ oder K eingeschlossenen Reaktivreste können, wie Ⓡ, über Aminogruppen, oder in anderer Weise, z.B. durch eine direkte Bindung an $D_1$ bzw. K gebunden sein.

Ein gebebenenfalls in $D_1$ oder k eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidin- rest oder ein aliphatischer Acylrest, wie ein Halogenacetyl- oder Halogenpropionylrest.

Insbesondere ist der zusätzliche Reaktivrest ein direkt oder über ein Brückenglied gebundener Vinylsulfonyl-, β-Sulfatoäthylsulfonyl-, β-Thiosulfatoäthylsulfonyl-, β-Chloräthylsulfonyl- oder β-Acetoxyäthylsulfonyl-Rest.

Die obigen Erläuterungen gelten sinngemäss auch für Disazofarbstoffe und Metallkomplexazofarbstoffe, sowie für andere in der Definition des Farbstoffrestes D in Formel (4) und (6) genannte Chromophore.

Falls man von Farbstoffvorprodukten ausgeht, gelangt man zu den Reaktivfarbstoffen der Formel (4) und (6), indem man eine Komponente des Farbstoffes der Formel (29), die eine Gruppe —$N(B_1)H$ enthält, und ein Triazin der Formel (30) kondensiert, vorher oder nachher mit einer Verbidung der Formel (38) oder (39) kondensiert, und mit der anderen Komponente des Farbstoffes der Formel (29) umsetzt. Bei der Herstellung der bevorzugten Azofarbstoffe müssen die Diazokomponenten und die Kupplungskomponenten zusammen mindestens eine Aminogruppe —$N(B_1)H$, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitro-gruppe vor der Kondensation mit dem 2,4,6-Trihalogentriazin durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho'-Stellung zur Azobrücke komplexbildende Gruppen, z.B. Hydroxy- oder Carboxygruppen, enthalten, vor oder gegebenenfalls auch nach der Kondensation mit dem 2,4,6-Trihalogen-triazin der Formel (30) mit schwermetallabgebenden Mitteln behandelt. Von besonderem Interesse sind Kupferkomplexe von Reaktivfarbstoffen der Formel (4) und (6). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (4) und (6) verwendet werden können, einzeln genannt werden.

Organische Farbstoffe der Formel (29)

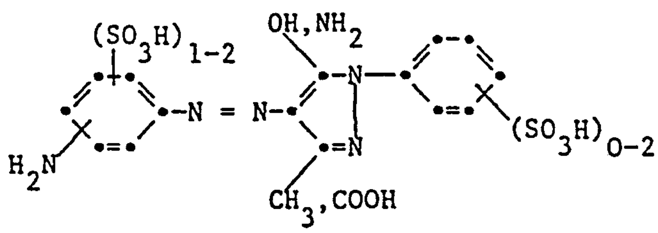

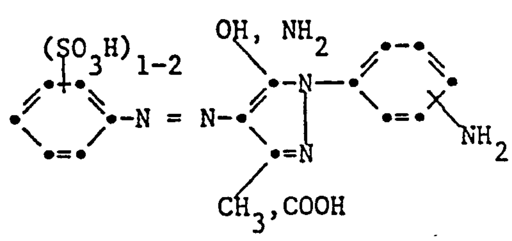

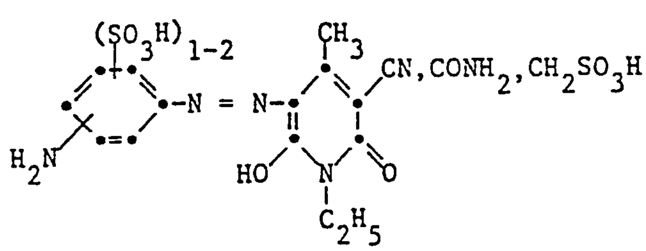

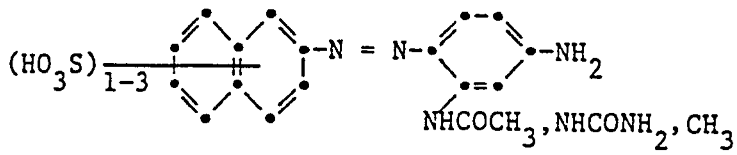

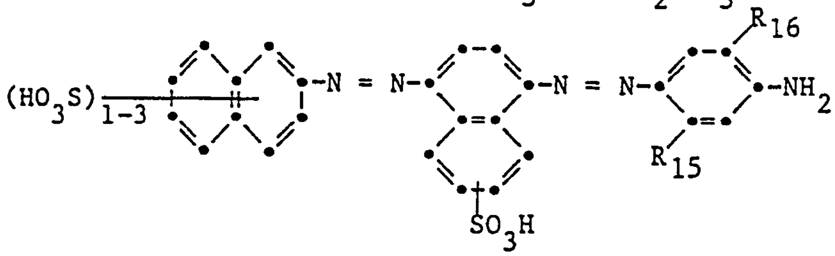

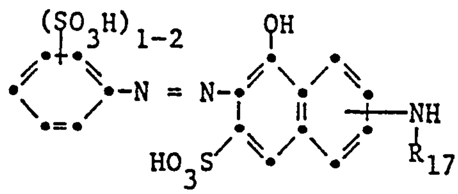

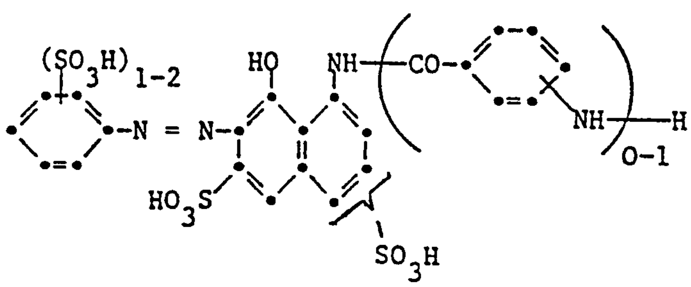

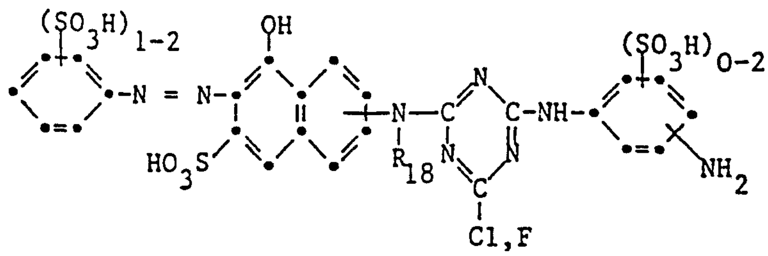

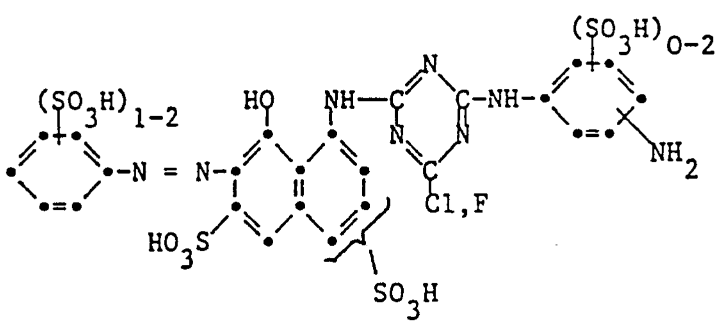

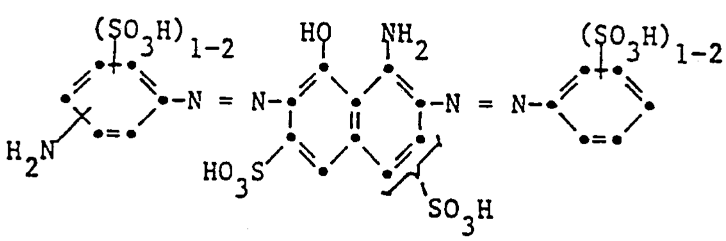

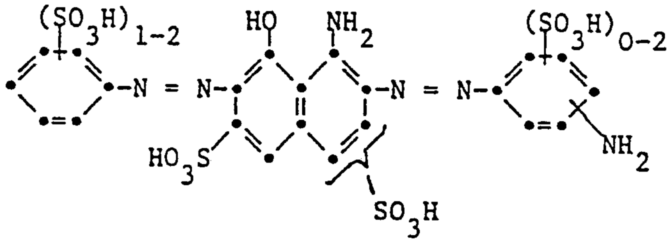

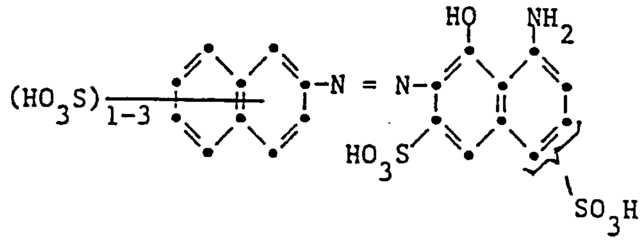

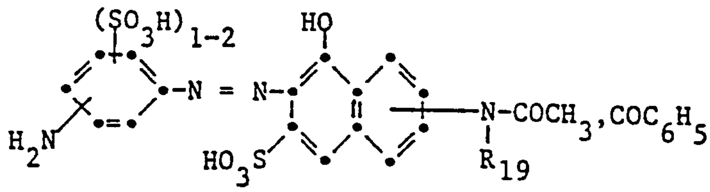

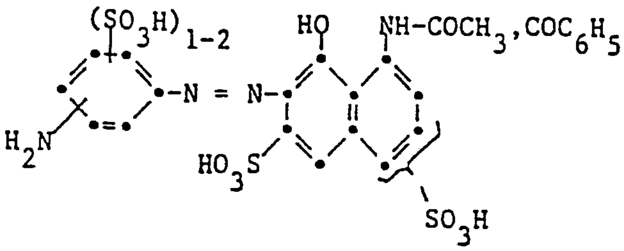

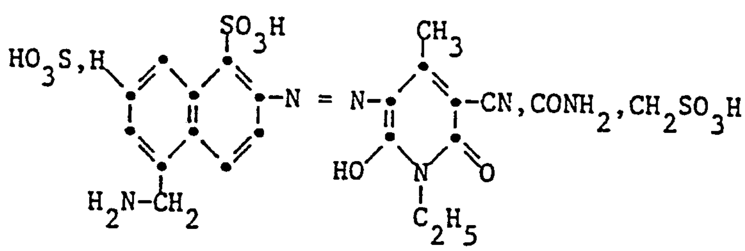

Metallkomplexe von Farbstoffen der Formeln:

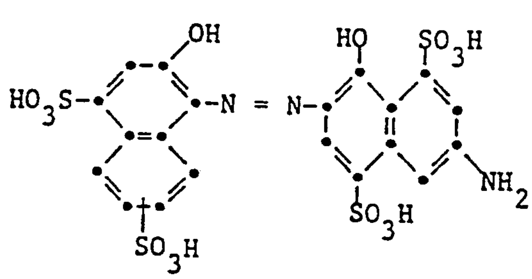

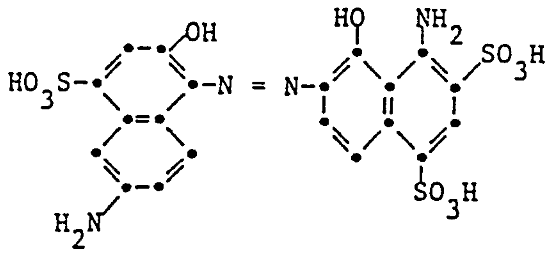

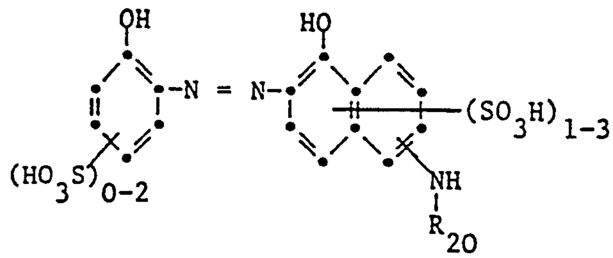

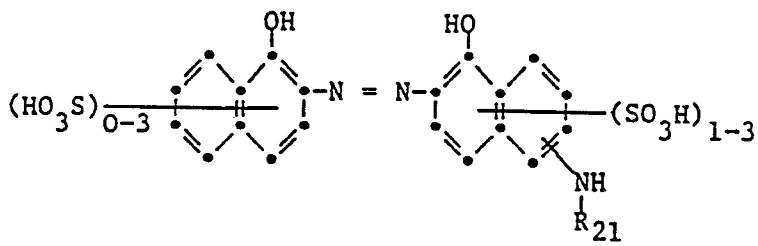

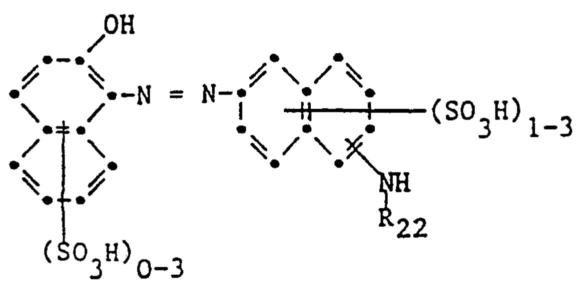

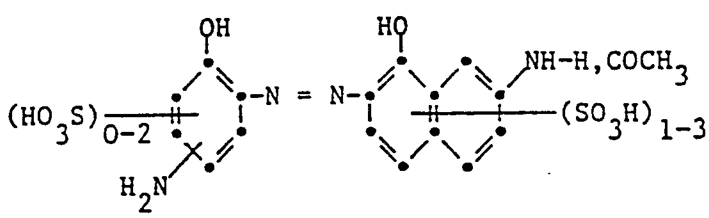

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. die können symmetrisch oder mit beliebigen anderen Liganden unsymmetrisch aufgebaut sein.

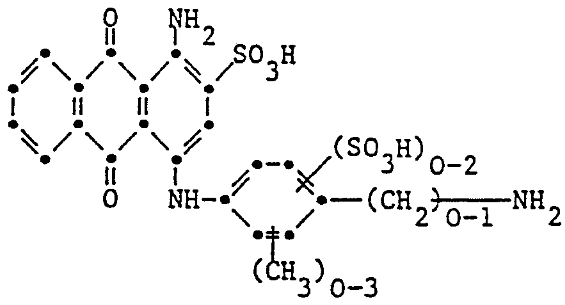

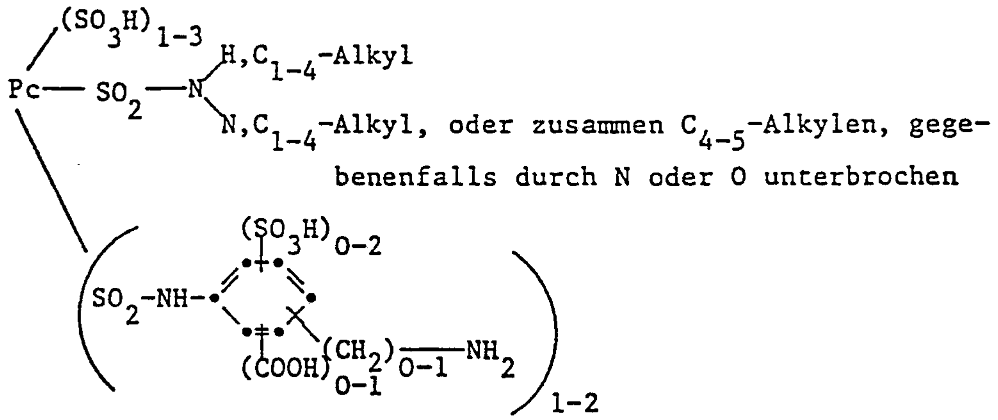

In dieser Formel steht Pc für den Cu- oder Ni-Phthalocyaninrest, die Gesamtzahl der Substituenten am Pc-Gerüst ist 4.

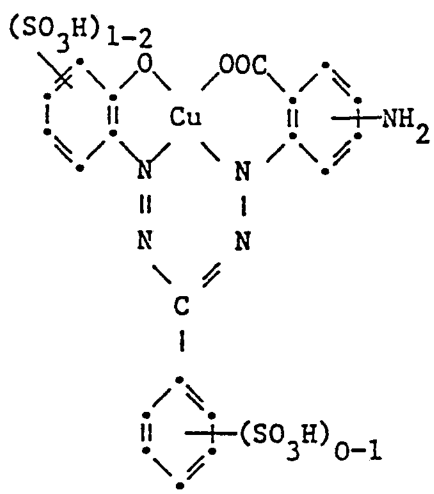

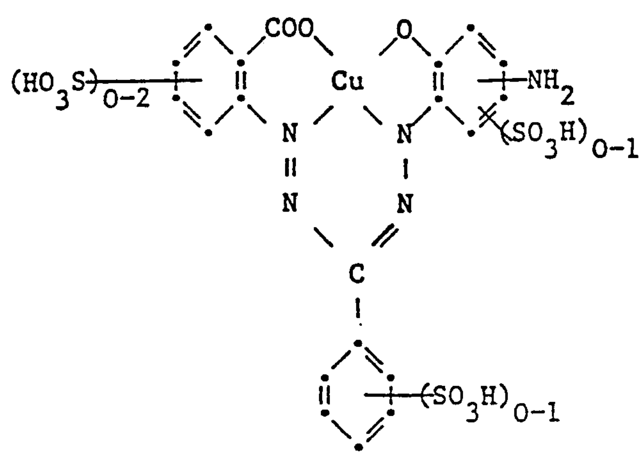

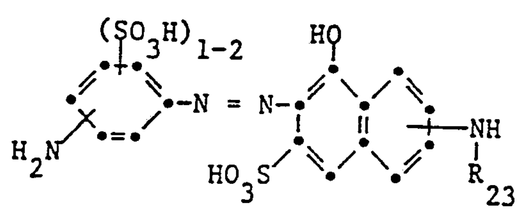

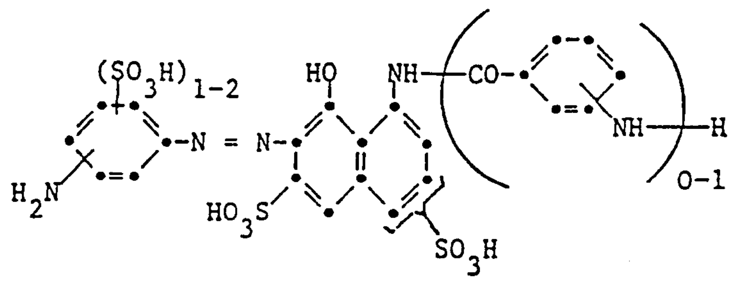

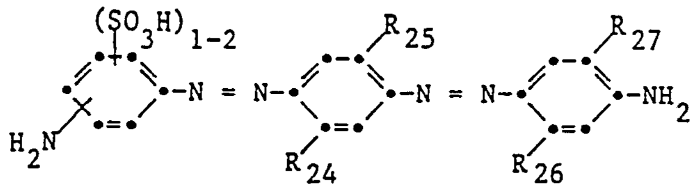

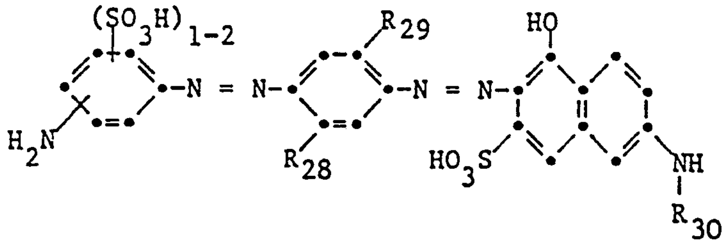

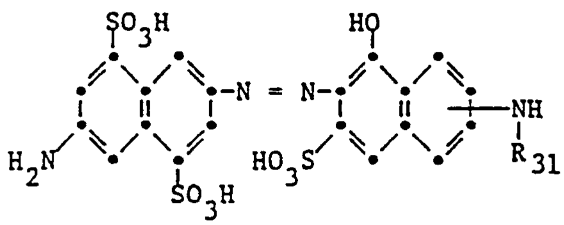

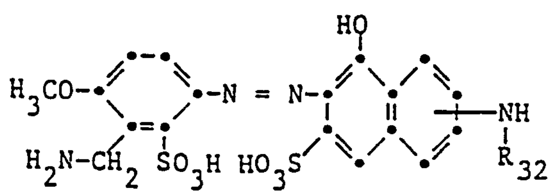

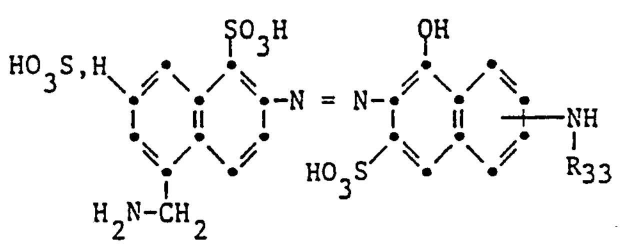

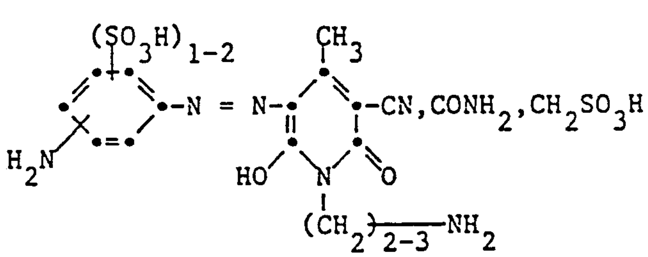

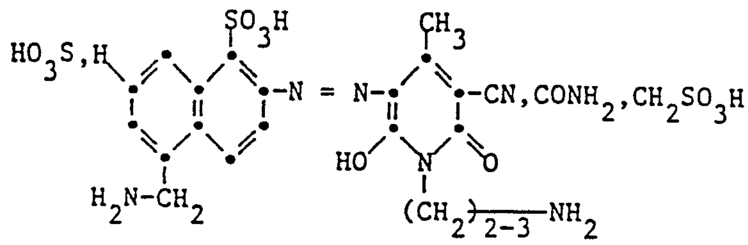

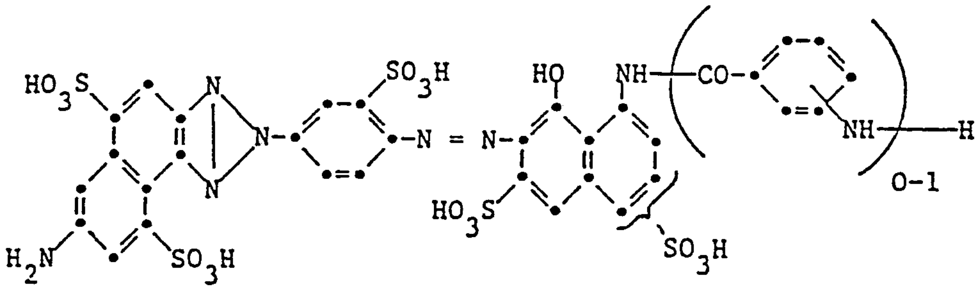

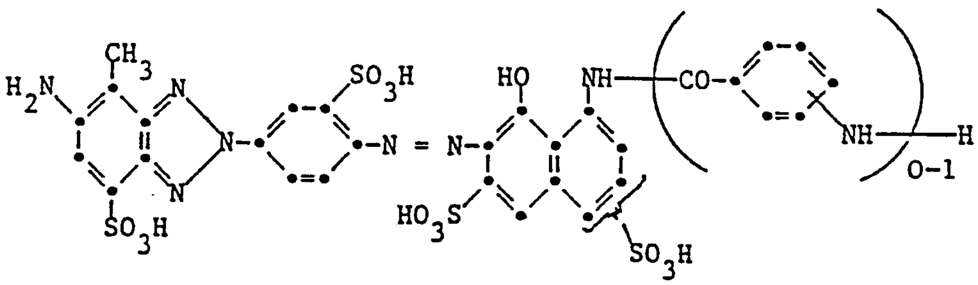

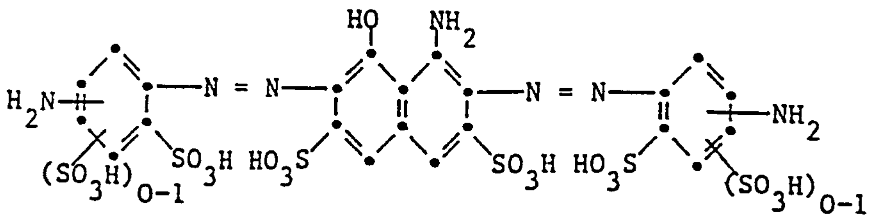

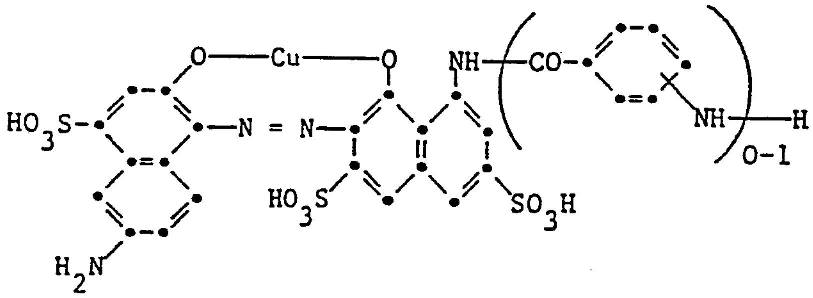

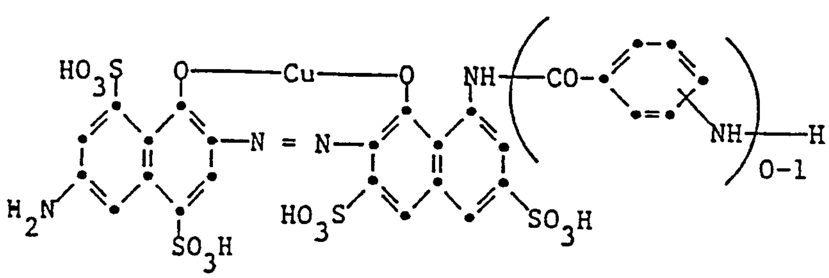

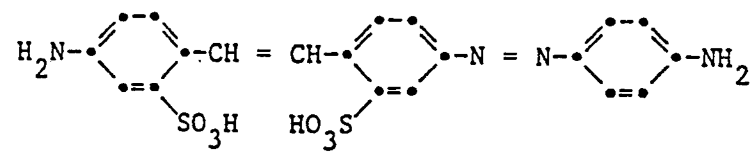

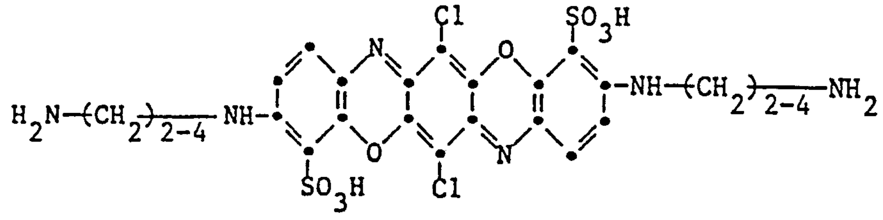

In den oben aufgeführten Formeln bedeuten die Reste $R_{17}$ bis $R_{23}$ und $R_{30}$ bis $R_{33}$ Wasserstoff oder $C_{1-4}$-Alkyl, und die Reste $R_{15}$, $R_{16}$ und $R_{24}$ bis $R_{29}$ Wasserstoff, $C_{1-4}$-Alkyl, $C_{1-4}$-Alkoxy, $C_{1-4}$-Alkanoylamino, Ureido, oder Halogen, wobei die Reste $R_{15}$, $R_{16}$ ... etc., die zu ein und derselben Formel gehören, voneinander unabhängig sind. Vorzungsweise bedeuten die Reste $R_{17}$ bis $R_{23}$ und $R_{30}$ die $R_{33}$ Wasserstoff, Methyl oder Aethyl, und die Reste $R_{15}$, $R_{16}$ und $R_{24}$ bis $R_{29}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe vor allem durch Methyl, Methoxy, Aethoxy, Carboxy, Acetylamino oder Chlor, und die Naphthalinringe insbesondere durch Methoxy, Carboxy, Acetylamino, Nitro oder Chlor; gleiches gilt für die Anthrachinone, Dioxazine usw. Vorzugsweise sind die Benzolringe nicht weitersubstituiert. Als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet.

Als Diazo- und Kupplungskomponenten seien einzeln genannt:

Diazokomponenten:

Aminobenzol, 1-Amino-2-, -3- oder -4-methylbenzol, 1-Amino-2-, -3- oder -4-methoxybenzol, 1-Amino-2-, -3- oder 4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-dīathylamid, Dehydrothio-9-toluidin-sulfonsäure, 1-Amino-3-tri fluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 1-Aminonaphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-4-sulfonsäure, 2-Amino-1-hydroxynaphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure, 1,3-Diaminobenzol, 1,4-Diaminobenzol, 1,3-Diamino-6-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,3-Diamino-naphthalin, 1,3-Diamino-2,4,6-trimethylbenzol, , 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzolyamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminophenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw- 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo-naphthalin-3,6-disulfonsäure, 1-Amino-8-hydroxy-2-(2',5-disulfophenylazo)-naphthalin-3,6-disulfonsäure, 1-β-Aminoäthyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyäthylaminobenzol, 1-Amino-3-N,N-di-β-sulfatoäthylaminobenzol, 1-Amino-3'-N,N,-di-β-hydroxyäthylamino-4-methoxybenzol, 1-Amino-3-N,N-di-β-sulfatoäthylamino-4-methoxybenzol, 1-Amino-3-sulfo-benzylamino-benzol, 1-Amino-3-sulfobenzylamino-4-chlorbenzol, 1-Amino-3-N,N-di-sulfobenzylaminobenzol.

Triazine der Formel (30)

2,4,6-Trifluor-s-triazin (Cyanurfluorid), 2,4,6-Trichlor-s-triazin (Cyanurchlorid), 2,4,6-Tribrom-s-triazin (Cyanurbromid).

Verbindungen der Formel (38) und (39)

3-Aminobenzosäure-N'-β-(β'-chloräthylsulfonyl)-äthylamid,

4-Chlor-3-aminobenzoesäure-N'-β-(β'-chloräthylsulfonyl)-äthylamid,

4-Methyl-3-aminobenzoesäure-N'-β-(β'-chloräthylsulfonyl)-äthylamid,
4-Methoxy-3-aminobenzoesäure-N'-β-(β'-chloräthylsulfonyl)-äthylamid,
3-Aminobenzoesäure-N'-β-[β'-(β''-chloräthylsulfonyl)-äthyloxy]-äthylamid,
3-Aminobenzoesäure-N'-γ-(β'-chloräthylsulfonyl)-propylamid,
3-Aminobenzoesäure-N'-bis-[β-[β'-chloräthylsulfonyl)-äthyl)-amid,
3-Aminobenzoesäure-N'-bis-[γ-(β'-chloräthylsulfonyl)-propyl]-amid,
3-N-Aethylaminobenzoesäure-N'-β-(β'-chloräthylsulfonyl)-äthylamid,
3-N-Isopropylaminobenzoesäure-N'-β-(β'-chloräthylsulfonyl)-äthylamid,
3-N-Isopropylaminobenzoesäure-N'-γ-(β'-chloräthylsulfonyl)-propylamid,
4-Aminobenzoesäure-N'-β-(β'-chloräthylsulfonyl)-äthylamid,
4-Aminobenzoesäure-N'-β-[β'-(β''-chloräthylsulfonyl)-äthyloxy]-äthylamid,
4-Aminobenzoesäure-N'-γ-(β'-chloräthylsulfonyl)-propylamid,
4-Aminobenzoesäure-N'-bis-[β-(β'-chloräthylsulfonyl)-äthyl]-amid,
4-Aminobenzoesäure-N'-bis-[γ-(β'-chloräthylsulfonyl)-propyl]-amid,
4-N-Aethylaminobenzoesäure-N'-β-(β'-chloräthylsulfonyl)-äthylamid,
4-N-Isopropylaminobenzoesäure-N'-γ-(β'-chloräthylsulfonyl)-propylamid,
4-Aminobenzoesäure-N'-β-(vinylsulfonyl)-äthylamid,
4-Aminobenzoesäure-N'-bis-[β-(vinylsulfonyl)-äthyl]-amid,
4-Aminobenzoesäure-N'-δ-(β'-chloräthylsulfonyl)-butylamid,
4-Chlor-3-aminobenzoesäure-N'-bis-[β(β'-chloräthylsulfonyl)-äthyl]-amid,
4-Methyl-3-aminobenzoesäure-N'-bis-[β(β'-chloräthylsulfonyl)-athyl]-amid,
4-Methoxy-3-aminobenzoesäure-N'-bis-[γ-(β'-chloräthylsulfonyl)-propyl]-amid,
3-Aminobenzoesäure-N'-δ-(β'-Chloräthylsulfonyl)-butylamid,
3-Aminobenzoesäure-N'-β-[β'-(β''-chloräthylsulfonyl)-äthyloxy]-äthylamid,
4-Hydroxy-3-aminobenzoesäure-N'-β-(β'-chloräthylsulfonyl)-äthylamid,
4-Hydroxy-3-aminobenzoesäure-N'-bis-[β-(β'-chloräthylsulfonyl)-äthyl]-amid,
4-Methoxy-3-aminobenzoesäure-N'-bis-[β-(β'-chloräthylsulfonyl)-äthyl]-amid,
sowie entsprechende Verbindungen, worin die β-Chloräthylsulfonyl-Gurppe durch β-Sulfatoäthylsulfonyl oder Vinylsulfonyl ersetzt ist; weiterhin kommen in Betracht:
4-Amino-3-sulfobenzoesäure-N'-β-(β'-chloräthylsulfonyl)-äthylamid,
4-Amino-3-sulfobenzoesäure-N'-β-(β'-sulfatoäthylsulfonyl)-äthylamid,
4-Amino-3-sulfobenzoesäure-N'-β-vinylsulfonyl-äthylamid,
3-Amino-2-sulfobenzoesäure-N'-β-vinylsulfonyl-äthylamid,
3-Amino-4-methoxybenzoesäure-N'-β-(β'-sulfatoäthylsulfonyl)-äthylamid,
4-Amino-3-sulfobenzoesäure-N'-bis-(β-vinylsulfonyl-äthyl)-amid,
3-Amino-4-methoxybenzoesäure-N'-bis-[β(β'-sulfatoäthylsulfonyl)-äthyl)-amid,
3-Amino-2-sulfobenzoesäure-N'-bis-(β-vinylsulfonyl-äthyl)-amid,
3-Amino-4-methoxybenzoesäure-N'-bis-(γ-vinylsulfonyl-propyl)-piperazid,
4-Amino-3-methoxybenzoesäure-N'-bis-(β-vinylsulfonyl-äthyl)-amid,
3-Aminobenzoesäure-N'-β-(β'-vinylsulfonyl-äthylamino)-äthylamid,
3-Amino-4-methylbenzoesäure-N'-(β-vinylsulfonyl-äthyl)-piperazid,
4-Amino-3-sulfobenzoesäure-N'-bis-[β(β'-sulfatoäthylsulfonyl)-äthyl]-amid,
3-Amino-4-methoxybenzoesäure-N'-bis-(β-vinylsulfonyl-äthyl)amid
3-Amino-4-methoxybenzoesäure-N'-(β-vinylsulfonyl-äthyl)-amid,
4-Amino-3-sulfobenzoesäure-N'-(γ-vinylsulfonyl-propyl)-piperazid,
4-Amino-3-sulfobenzoesäure-N'-β-(β'-vinylsulfonyl-äthylamino)-äthylamid,
3-Amino-4-methylbenzoesäure-N'-β-(β'-sulfatoäthylsulfonyl)-äthylamid,
4-Amino-3-sulfobenzoesäure-N'-bis[β-(β'-chloräthylsulfonyl)-äthyl]-amid,
4-Amino-3-sulfobenzoesäure-N'-(β-vinylsulfonyl-äthyl)-piperazid,
4-Amino-3-sulfobenzoesäure-N'-β(β'-vinylsulfonyl-äthylamino)-äthylamid,
5-Amino-1,3-bezoldicarbonsäure-N',N''-(β-vinylsulfonyl-äthyl)-diamid,
4-Amino-3-sulfobenzoesäure-N'-β-(β'-vinylsulfonyl-äthyloxy)-äthylamid,
ferner analoge Aminobenzoesäureamide oder Aminobenzolsulfonsäureamide der folgenden Aminoverbindungen;
β-[β'-(β''-Chloräthylsulfonyl)-äthylamino]-äthylamin,
β-(β'-Vinylsulfonyl-äthylamino)-äthylamin,
β-[β'-(β''-Sulfatoäthylsulfonyl)-α'-methyl-äthylamino]-äthylamin,
β-[β'-(β''-Sulfatoäthylsulfonyl)-α'-methyl-äthylamino]-β-methyl-äthylamin,
γ-[β-(β''-Sulfatoäthylsulfonyl)-α'-methyl-äthylamino]-propylamin,
δ-[β-(β''-Sulfatoäthylsulfonyl)-α'-methyl-äthylamino]-n-butylamin,
α-Carbonsäure-β-(β'-chloräthylsulfonyl)-äthylamin,
α-Carbonsäureäthylester-β-(β'-chloräthylsulfonyl)-äthylamin,
β-Hydroxy-γ-(β'-chloräthylsulfonyl)-propylamin,
β-γ-(Bis-β'-chloräthylsulfonyl)-propylamin,
β-Acetoxy-γ-(β'-acetoxyäthylsulfonyl)-propylamin,

β-Chlor-γ-(β'-chloräthylsulfonyl)-propylamin,
β-Sulfato-γ-(β'-sulfatoäthylsulfonyl)-propylamin,
Bis-[β-hydroxy-γ-(β'-chloräthylsulfonyl)-propyl]-amin,
Bis-[β-chlor-γ-(β'-chloräthylsulfonyl)-propyl]-amin,
Bis-[β-sulfato-γ-(β'-sulfatoäthylsulfonyl)-propyl]-amin,
β-Hydroxy-γ-(β'-vinylsulfonyl)-propylamin,

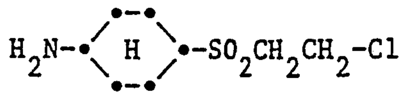

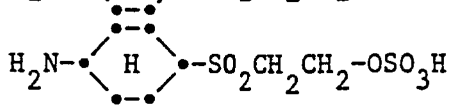

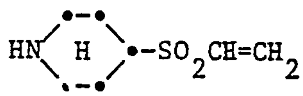

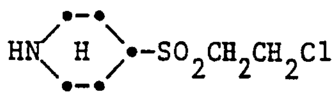

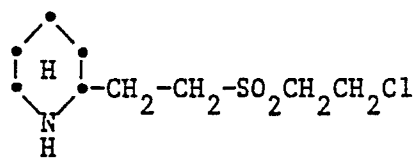

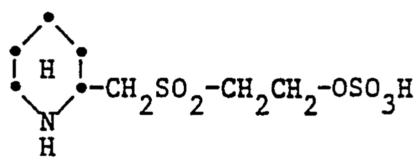

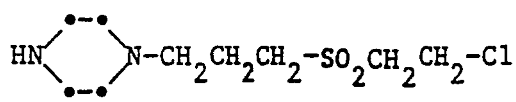

$H_2N-CH_2CH_2-O-CH_2CH_2-SO_2CH_2CH_2-Cl$

$H_2N-CH_2CH_2CH_2-O-CH_2CH_2CH_2-SO_2CH_2CH_2-Cl$

$H_2N-CH_2CH_2-NH-CH_2CH_2SO_2-CH_2CH_2-Cl$

$H_2N-CH_2CH_2-NH-CH_2CH_2SO_2-CH=CH_2$

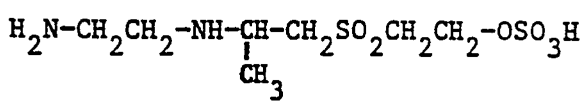

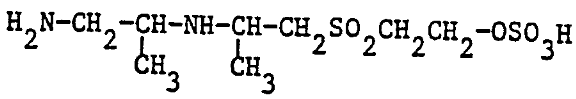

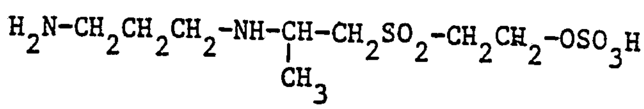

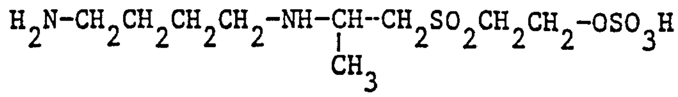

$H_2NCH_2CH_2SO_2CH_2CH_2Cl$

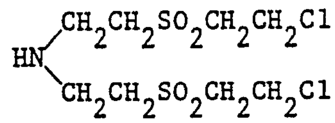

$H_2NCH_2CH_2OCH_2CH_2SO_2CH_2CH_2Cl$

$H_2NCH_2CH_2SO_2CH{=}CH_2$

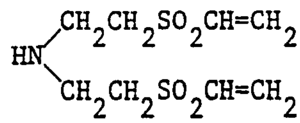

$H_2NCH_2CH_2OCH_2CH_2SO_2CH{=}CH_2$

$H_2NCH_2CH_2NHCH_2CH_2SO_2CH{=}CH_2$

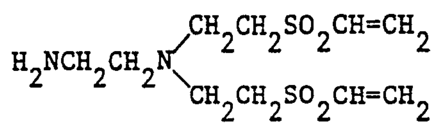

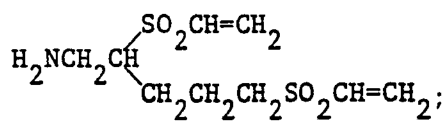

1-Aminobenzol-2-, -3- oder -4-β-sulfatoäthylsulfon,
1-Amino-4-methylbenzol-3-β-sulfatoäthylsulfon,
1-Aminobenzol-3-β-chloräthylsulfon,
1-Amino-4-methoxybenzol-3-β-sulfatoäthylsulfon,
1-Aminobenzol-4-β-sulfatoäthylsulfon-2-sulfonsäure,
1-Aminobenzol-5-β-sulfatoäthylsulfon-2-sulfonsäure,
1-Aminobenzol-5-β-sulfatoäthylsulfon-2,4-disulfonsäure,
1-Aminonaphthalin-4-β-sulfatoäthylsulfon,
1-Amino-2,5-dimethoxybenzol-4-β-sulfatoäthylsulfon,
1-Aminobenzol-4-β-sulfatoäthylsulfon-2-carbonsäure,
1-Aminobenzol-5-β-sulfatoäthylsulfon-2-carbonsäure,
1-Amino-2-methoxybenzol-4-β-sulfatoäthylsulfon,
1-Amino-2-chlorbenzol-4-β-sulfatoäthylsulfon,
1-Amino-2-methoxybenzol-5-β-sulfatoäthylsulfon,
2-Aminonaphthalin-8-β-sulfatoäthylsulfon,
2-Aminonaphthalin-(-β-sulfatoäthylsulfon-6-sulfonsäure,
1-Amino-2,5-dimethoxybenzol-4-vinylsulfon,
1-Amino-2-methoxy-5-methylbenzol-4-β-sulfatoäthylsulfon,
1-Amino-2,5-diäthoxybenzol-4-β-sulfatoäthylsulfon,
1-Amino-2-brombenzol-4-β-sulfatoäthylsulfon,
1-Amino-2-brombenzol-4-vinylsulfon,
1-Aminobenzol-5-vinylsulfon-2,4-disulfonsäure,
1-Aminobenzol-5-β-phosphatoäthylsulfon-2,4-disulfonsäure,

1-Aminobenzol-5-β-chloräthylsulfon-2,4-disulfonsäure,
2-Aminonaphthalin-8-β-phosphatoäthylsulfon-6-sulfonsäure,
2-Aminonaphthalin-(-β-phosphatoäthylsulfon-6-sulfonsäure,
2-Aminonaphthalin-8-vinylsulfon-6-sulfonsäure,
1-Amino-2-methoxy-5-methylbenzol-4-β-chloräthylsulfon,
2-Aminophenol-4-β-sulfatoäthylsulfon,
1-Aminobenzol-3- oder -4-vinylsufon,
1-Amino-2-hydroxybenzol-4-β-sulfatoäthylsulfon,
1-Aminobenzol-5-vinylsulfon-2-sulfonsäure,
3-(N-Methyl-β-sulfatoäthylsulfonylamino)-1-aminobenzol,
3-(N-Aethyl-β-sulfatoäthylsulfonylamino)-1-aminobenzol,
3-β-Sulfato-äthylsulfonylamino-1-aminobenzol.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation des 2,4,6-Trihalogen-s-triazins mit den organischen Farbstoffen der Formel (29) bzw. den eine Gruppe —$N(B_1)H$ enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (38) oder (39) setzt man die freien Amine oder deren Salze, bevorzugt in Form des Hydrochlorids, ein. Die Umsetzung wird bei Temperaturen etwa zwischen 0 und 40°, bevorzgut zwischen 5 under 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Halogentriazins mit einer Verbindung der Formel (38) oder (39) kann vor oder nach der Kondensation des Halogentriazins mit einem Farbstoff der Formel (29) geschehen. Die Kondensation des Halogentriazins mit einer Verbindung der Formel (38) oder (39) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alaklihydroxiden, -carbonaten oder -bicarbonaten neutralisiert.

Ausserdem können Eliminierungsreaktionen an die Synthese angeschlossen werden. Beispielsweise kann man Reaktivfarbstoffe der Formel (4) und (6), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Die Reaktivfarbstoffe der Formel (4) und (6) eignen sich zum Färben und Bedrucken der verschiedensten Materialien, wie Seide, Leder, Wolle, Polyamidfasern und Polyurethanen, und insbesondere cellulosehaltigen Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (4) und (6) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf des Fasermaterial applizieren und auf der Faser fixieren, insbesondere in Form von wässrigen Farbstofflösungen und -drunkpasten. Sie eignen sich sowohl für das Ausziehverfahren als auch zum Färben nach dem Foulardfärbeverfaren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (4) und (6) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch. und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (4) und (6) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hobe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit. Ferner sind die erfindungsgemässen Farbstoffe für das gleichzeitige Färben und Ausrüsten von Textilien, insbesondere Cellulosefasermaterialien, sehr geeignet.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazowischenverbindung ist in den nachfolgenden Ausführungsbeispielen nicht in allen Fällen beschrieben, sie ergibt sich jedoch ohne weiteres aus der allgemeinen Beschreibung.

Beispiel 1

31,9 Teie 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung schwach kongosauer gehalten wird. Nach Zusatz einer auf pH 5 gestellten Mischung von 32,8 Teilen 4-Aminobenzoesäure-N'-β-(β'--chloräthylsulfonyl)-äthylamidhydrochlorid in 100 ml Wasser wird der pH der Reaktionsmischung durch ständige Zugabe von 2n Natriumhydroxidlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 6,5 mit 30,3 Teilen diazotiertem 2-Amino-1,5-disulfonsäure-naphthalin gekuppelt. Nach vollständiger Kupplungsreaktion bei pH 8 wird die Temperatur der Reaktionsmischung auf 65° erhöht und mit 4n HCl auf einen pH-Wert von 3,0 gestellt. Bei dieser Temperatur und einem pH-Wert von 3,0 bis 3,2 wird das Kondensationsprodukt 4 Stunden hydrolysiert. Der gebildete Reaktivfarbstoff der Formel

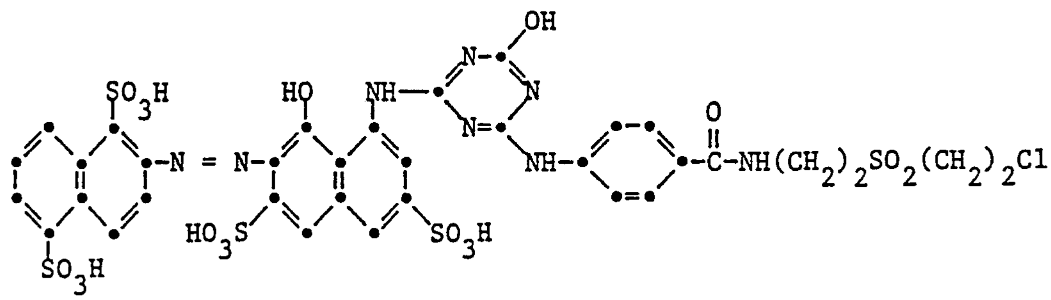

wird durch Eindampfen oder Gefriertrocknen der Reaktionslösung bei pH 7 isoliert. Er färbt Baumwolle in roten Tönen.

Beispiel 2

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung schwach kongosauer gehalten wird. Nach Zusatz einer auf pH 5 gestellten Mischung von 32,8 Teilen 3-Aminobenzoesäure-N'-β-(β'-chloräthylsulfonyl)-äthylamidhydrochlorid in 100 ml Wasser wird der pH der Reaktionsmischung durch ständige Zugabe von 2n Natriumhydroxidlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 6,5 mit 30,3 Teilen diazotiertem 2-Amino-1,5-disulfonsäure-naphthalin gekuppelt. Nach vollständiger Kupplungsreaktion bei pH 8 wird die Temperatur der Reaktionsmischung auf 65° erhöht und mit 4n HCl auf einen pH-Wert von 3,0 gestellt. Bei dieser Temperatur und einem pH-Wert von 3,0 bis 3,2 wird das Kondensationsprodukt 4 Stunden hydrolysiert. Der gebildete Reaktivfarbstoff der Formel

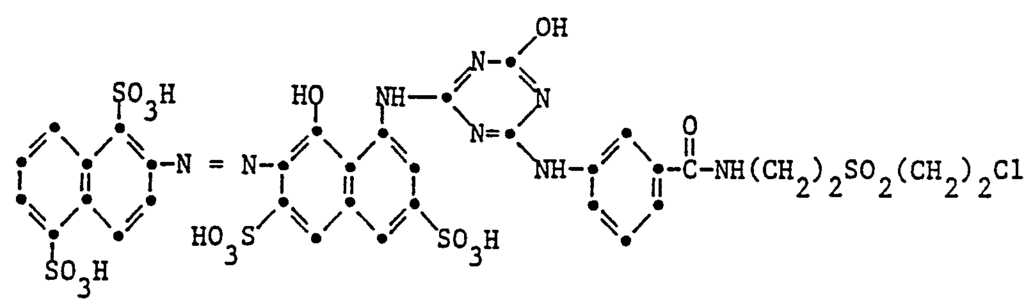

wird durch Eindampfen oder Gefriertrocknen der Reaktionslösung bei pH 7 isoliert. Er färbt Baumwolle in roten Tönen.

Beispiel 3

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung schwach kongosauer gehalten wird. Nach Zusatz einer auf pH 5 gestellten Mischung von 32,8 Teilen 3-Aminobenzoesäure-N'-β-(β'-chloräthylsulfonyl)-äthylamidhydrochlorid in 100 ml Wasser wird der pH der Reaktionsmischung durch ständige Zugabe von 2n Natriumhydroxidlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 6,5 mit 25,0 Teilen diazotiertem 4-β-Sulfatoäthylsulfonyl-anilin gekuppelt. Nach vollständiger Kupplungsreaktion bei pH 8 wird die Temperatur der Reaktionsmischung auf 65° erhöht und mit 4n HCl auf einen pH-Wert von 3,0 gestellt. Bei dieser Temperatur und einem pH-Wert von 3,0 bis 3,2 wird das Kondensationsprodukt 4 Stunden hydrolysiert. Der gebildete Reaktivfarbstoff der Formel

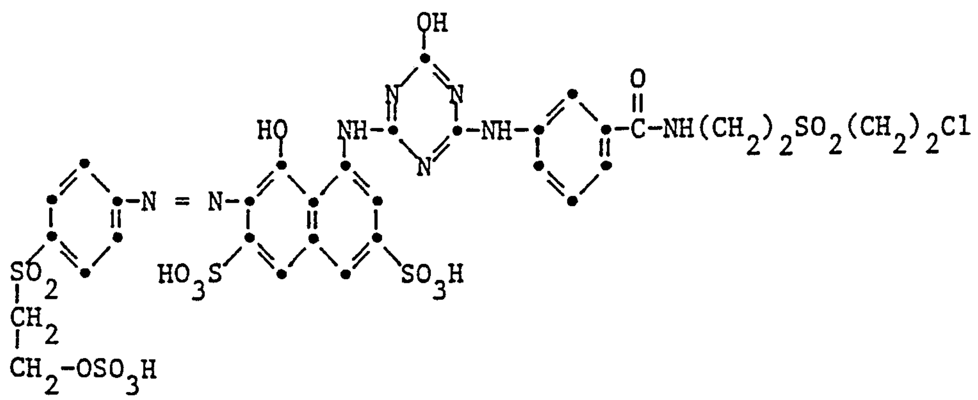

wird zur Abscheidung mit 10% Natriumchlorid versetzt und filtriert. Die erhaltene Paste wird im Vakuum bei 40 bis 50° getrocknet. Der Farbstoff färbt Baumwolle in roten Tönen.

Beispiel 4

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung schwach kongosauer gehalten wird. Nach Zusatz einer auf pH 5 gestellten Mischung von 32,8 Teilen 3-Aminobenzoesäure-N'-β-(β'-chloräthylsulfonyl)-äthylamidhydrochlorid in 100 ml Wasser wird der pH der Reaktionsmischung durch ständige Zugabe von 2n Natriumhydroxidlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 6,5 mit 25,0 Teilen diazotiertem 4-β-Sulfatoäthylsulfonyl-anilin gekuppelt. Nach vollständiger Kupplungsreaktion bei pH 8 wird die Temperatur der Reaktionsmischung auf 65° erhöht und mit 4n HCl auf einen pH-Wert von 3,0 gestellt. Bei dieser Temperatur und einem pH-Wert von 3,0 bis 3,2 wird das Kondensationsprodukt 4 Stunden hydrolysiert. Der gebildete Reakivfarbstoff der Formel

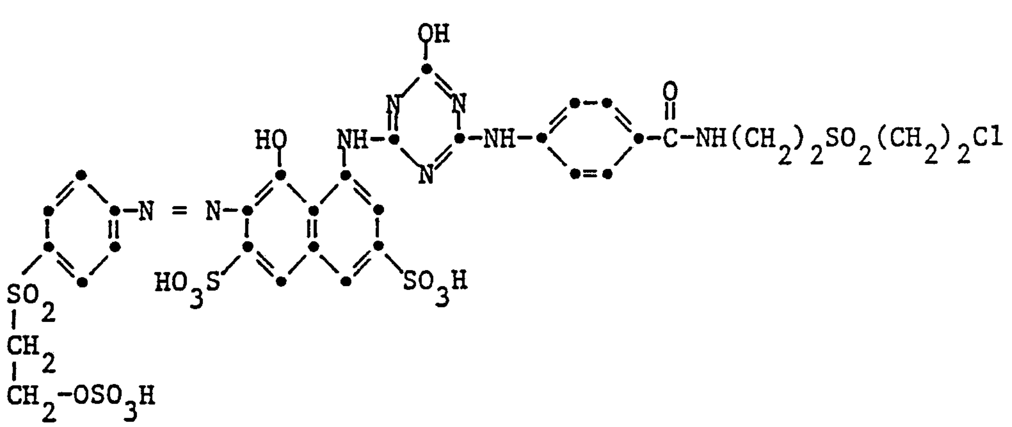

wird zur Abscheidung mit 10% Natriumchlorid versetzt und filtriert. Die erhaltene Paste wird im Vakuum bei 40 bis 50° getrocknet. Der Farbstoff färbt Baumwolle in roten Tönen.

Beispiel 5

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung schwach kongosauer gehalten wird. Nach Zusatz einer auf pH 5 gestellten Mischung von 32,8 Teilen 4-Aminobenzoesäure-N'-β-(β'-chloräthylsulfonyl)-äthylamidhydrochlorid in 100 ml Wasser wird der pH der Reaktionsmischung durch ständige Zugabe von 2n Natriumhydroxidlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 6,5 mit 32,8 Teilen diazotiertem 4-Aminobenzoesäure-N'-β-(β'-chloräthylsulfonyl)-äthylamid-hydrochlorid gekuppelt. Nach vollständiger Kupplungsreaktion bei pH 8 wird die Temperatur der Reaktionsmischung auf 65° erhöht und mit 4n HCl auf einen pH-Wert von 4,0 gestellt. Bei dieser Temperatur und einem pH-Wert von 4,0 bis 4,2 wird das Kondensationsprodukt 7 Stunden hydrolysiert. Der gebildete Reakivfarbstoff der Formel

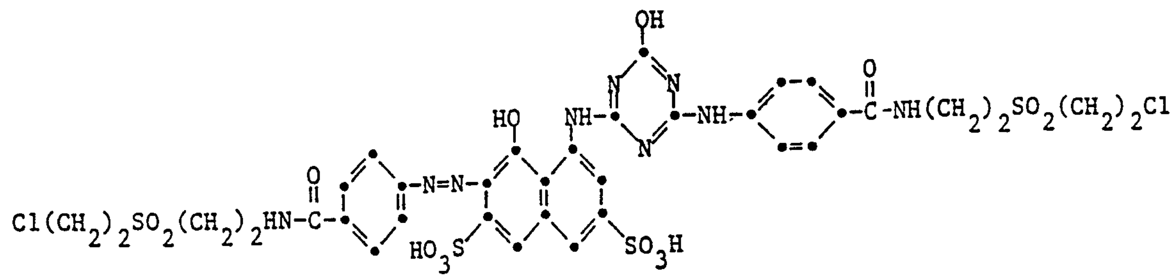

wird zur Abscheidung mit 10% Natriumchlorid versetzt und filtriert. Die erhaltene Paste wird im Vakuum bei 40 bis 50° getrocknet. Der Farbstoff färbt Baumwolle in roten Tönen.

Beispiel 6

31,9 Teile 1-Amino-8-hydroxynaphthalin-3,6-disulfonsäure werden in 800 ml Wasser neutral gelöst und die Lösung auf 0 bis 5° abgekühlt. Bei dieser Temperatur werden 14,2 Teile 2,4,6-Trifluor-1,3,5-triazin innert 20 Minuten zugetropft, wobei der pH der Reaktionslösung durch gleichzeitige Zugabe von 2n Natriumhydroxidlösung schwach kongosauer gehalten wird. Nach Zusatz einer auf pH 5 gestellten Mischung von 32,8 Teilen 4-Aminobenzoesäure-N'-β-(β'-chloräthylsulfonyl)-äthylamidhydrochlorid in 100 ml Wasser wird der pH der Reaktionsmischung durch ständige Zugabe von 2n Natriumhydroxidlösung zuerst kurze Zeit schwach kongosauer und dann bei 5 bis 6 gehalten. Dabei wird die Temperatur innert 2 bis 3 Stunden auf 20 bis 25° erhöht. Nach vollständiger Reaktion wird dieses Zwischenprodukt bei 0 bis 10° und pH 6,5 mit 37,8 Teilen diazotiertem 3-Aminobenzoesäure-N'-β-(β'-chloräthylsulfonyl)-äthylamid-hydrochlorid gekuppelt. Nach vollständiger Kupplungsreaktion bei pH 8 wird die Temperatur der Reaktionsmischung auf 65° erhöht und mit 4n HCl auf einen pH-Wert von 3,0 gestellt. Bei dieser Temperatur und einem pH-Wert von 3,0 bis 3,2 wird das Kondensationsprodukt 4 Stunden hydrolysiert. Der gebildete Reakivfarbstoff der Formel

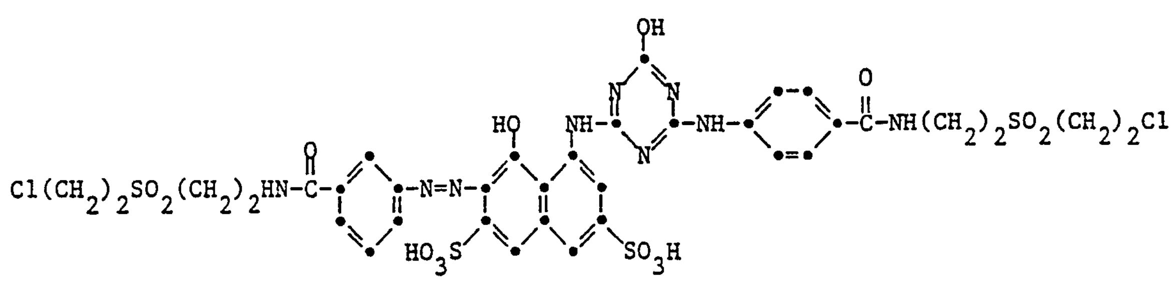

wird zur Abscheidung mit 10% Natriumchlorid versetzt und filtriert. Die erhaltene Paste wird im Vakuum bei 40 bis 50° getrocknet. Der Farbstoff färbt Baumwolle in roten Tönen.

Analog zu den beschriebenen Methoden (Beispiele 1 bis 6) lassen sich auch die in der folgenden Tabelle aufgeführten Farbstoffe herstellen, die Baumwolle im angegebenen Farbton färben.

Tabelle

| Bsp. | | Farbton |
|---|---|---|
| 7 | 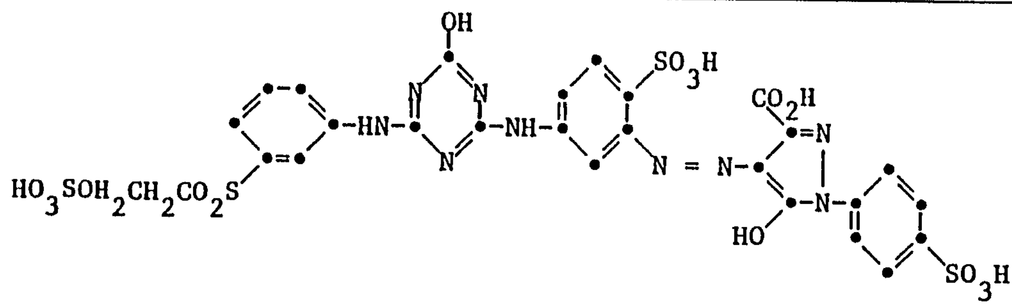 | gelb |
| 8 | 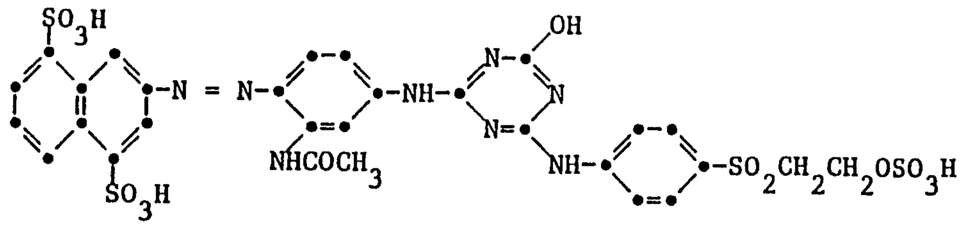 | goldgelb |
| 9 | 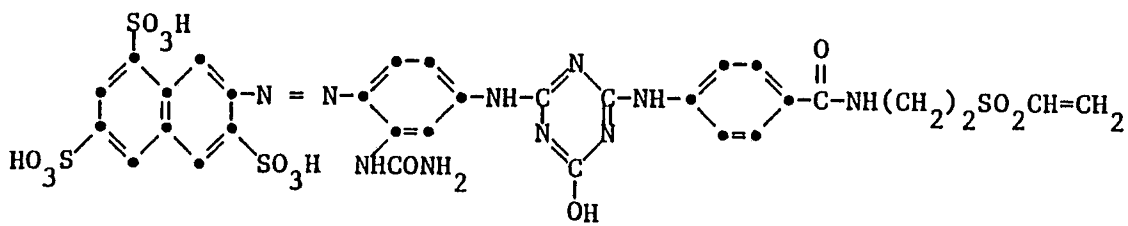 | goldgelb |
| 10 | 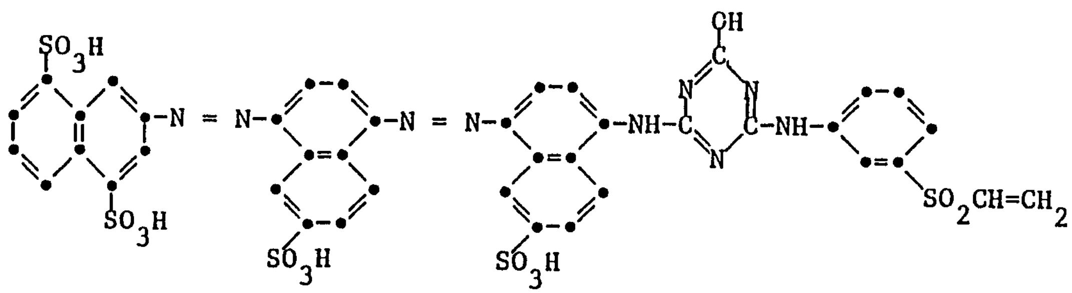 | braun |

| Bsp. | | Farbton |
|---|---|---|
| 11 | 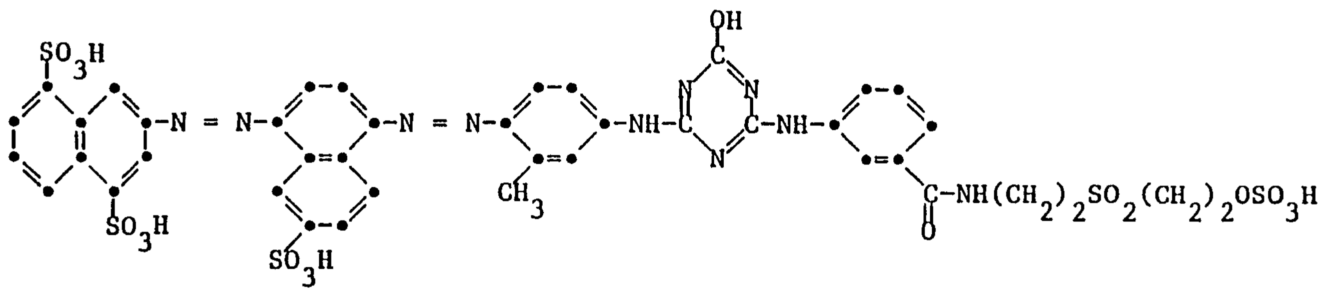 | braun |
| 12 | 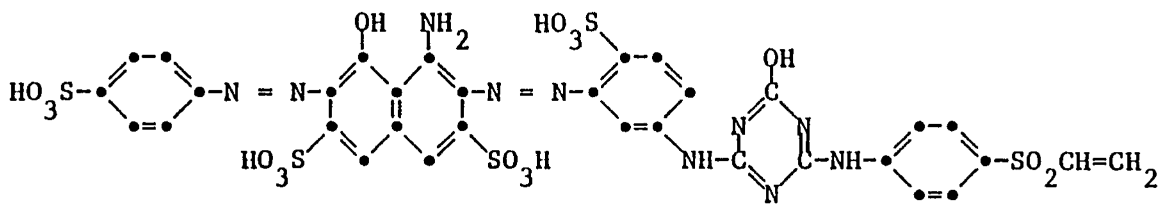 | marineblau |
| 13 | 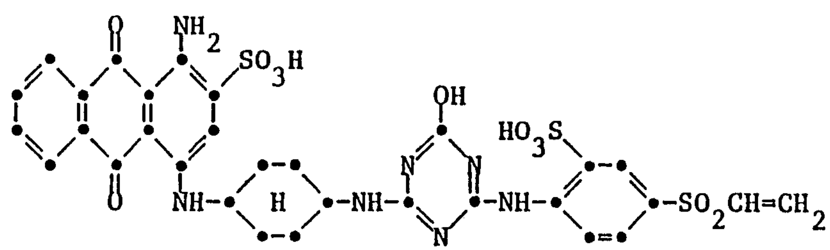 | blau |
| 14 | 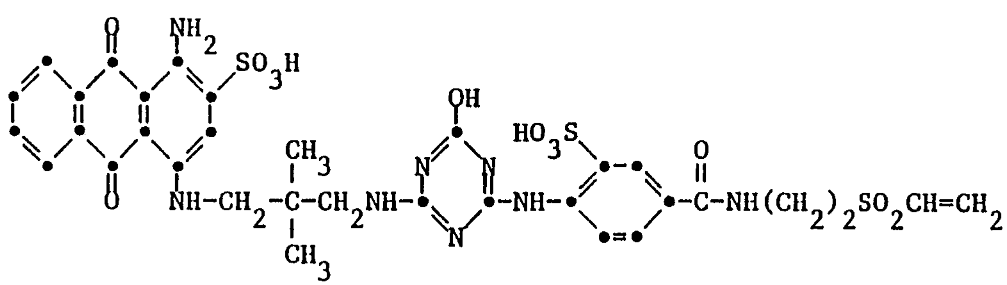 | blau |

| Bsp. | | Farbton |
|---|---|---|
| 15 | 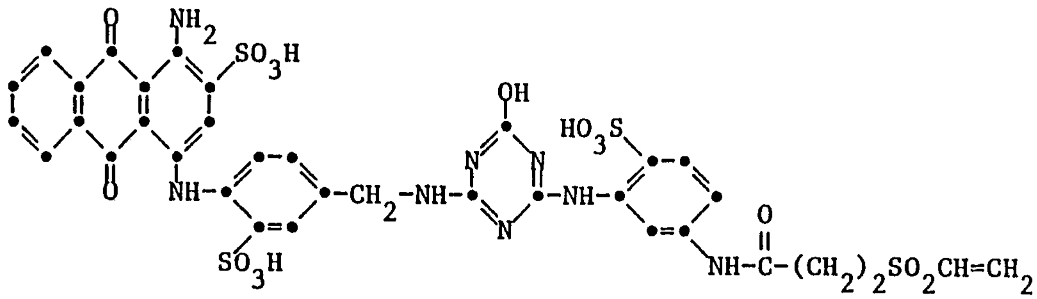 | blau |
| 16 | 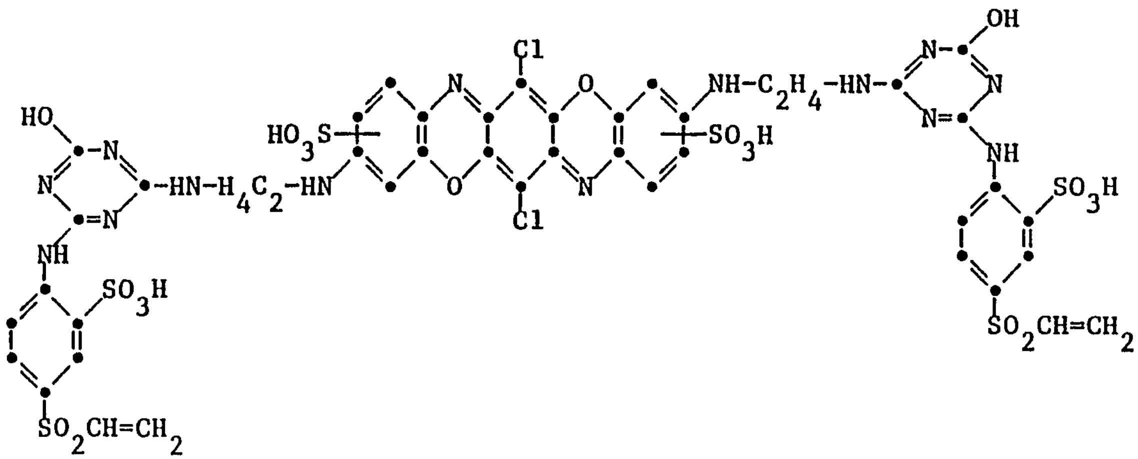 | blau |

| Bsp. | | Farbton |
|---|---|---|
| 17 | 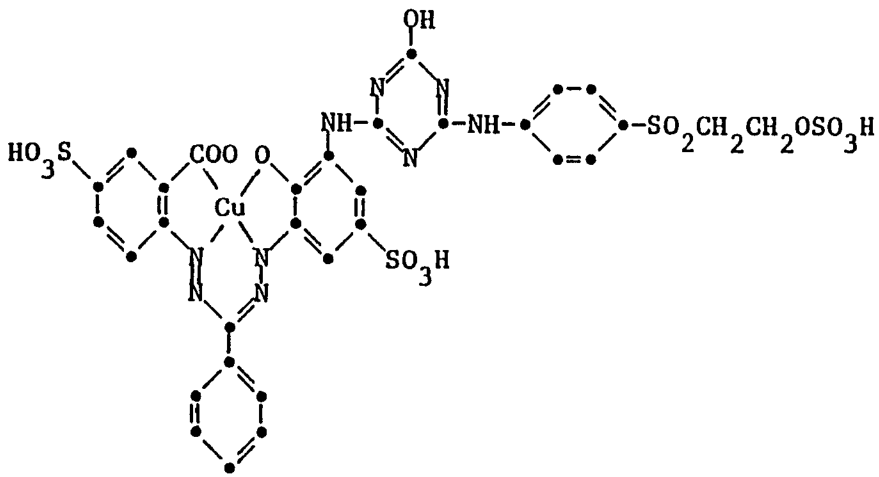 | blau |
| 18 | 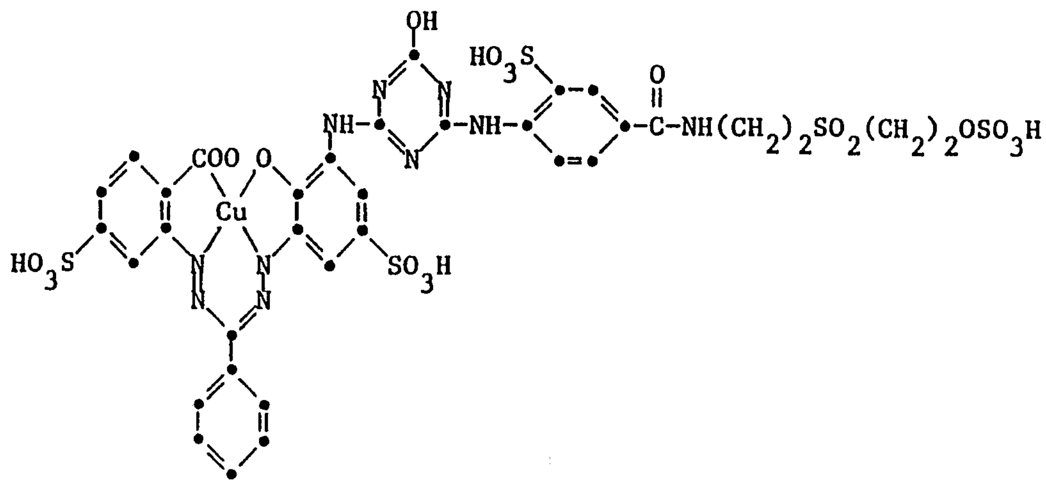 | blau |

| Bsp. | | Farbton |
|---|---|---|
| 19 | 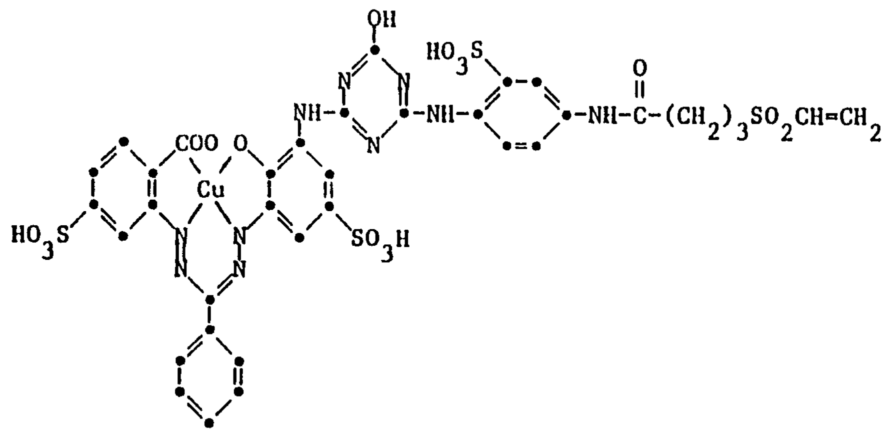 | blau |
| 20 | 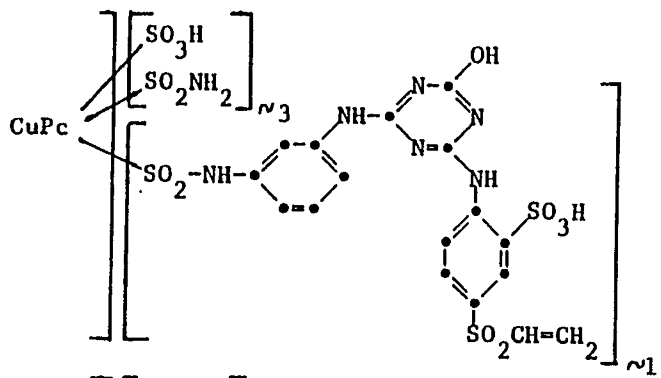 | türkis |
| 21 | 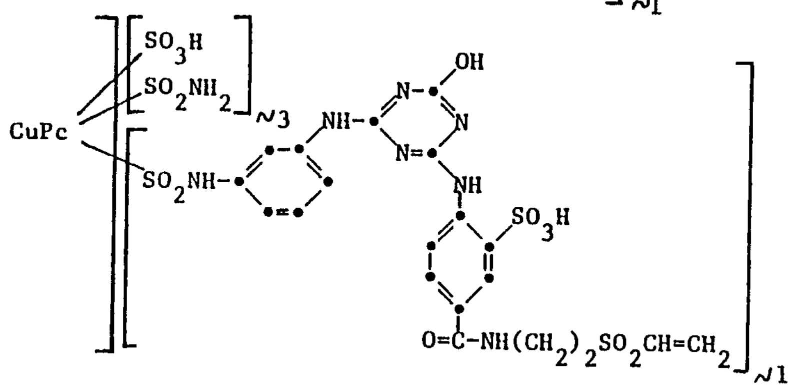 | türkis |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

2 Teile des gemäss Beispiel 1 erhaltenen Reaktivfarbstoffes werden in 400 Teilen Wasser gelöst; dazu gibt man 1400 Teile einer Lösung, die pro Liter 100 g Natriumchlorid enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten bei 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumchlorid und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumchlorid und 0,04 Liter Wasserglas (38°Bé) enthält. Mit der erhaltenen Lösung wird ein Baumwollgewebe foulardiert, so dass es um 70% seines Gewichtes zunimmt, und dann auf eine Kaule aufgewickelt. Das Boumollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumollgewebe imprägniert, so dass es um 75% seines Gewichtes zunimmt, und dann getrocknet. Dann imprägniert man des Gewebe mit einer 20°C warmen Lösung, die pro Liter 4 g Natriumhydroxyd und 300 g Natriumchlorid enthält, quetscht auf 75% Gewichtszunahme ab, dämpft die Farbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht,

bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

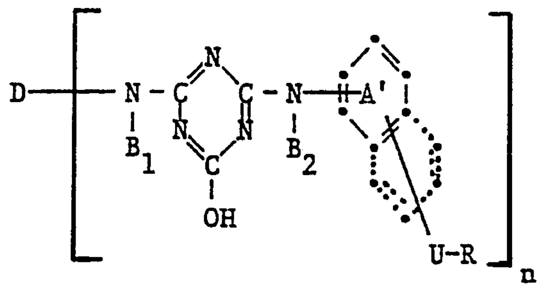

(4) ,

worin D der Rest eines Monoazo-, Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Farbstoffes;

$B_1$ und $B_2$ unabhängig voneinander Wasserstoff oder Alkyl mit 1 bis 4 Kohlenstoffatomen, das durch Carboxy, Sulfo, Cyan oder Hydroxy substituiert sein kann; U —CO— oder —$SO_2$—; R ein Rest der Formel

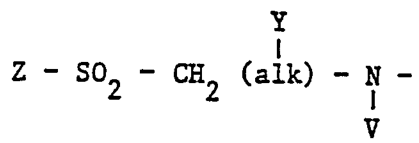

(5a) ,

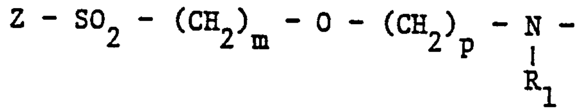

(5b) ,

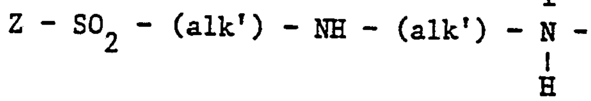

(5c)

oder

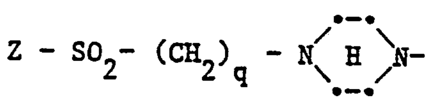

(5d)

ist, Z β-Sulfatoäthyl, β-Thiosulfatoäthyl, β-Phosphatoäthyl, β-Acetoxyäthyl, β-Halogenäthyl oder Vinyl; alk ein Polymethylenrest mit 1 bis 6 C-Atomen oder dessen verzweigte Iosmere; Y Wasserstoff, Chlor, Brom, Fluor, Hydroxy, Sulfato, Acyloxy mit 1 bis 4 C-Atomen, Cyano, Carboxy, Alkoxycarbonyl mit 1 bis 5 C-Atomen, Carbamoyl, oder ein rest —$SO_2$—Z, worin Z die oben angegebene Bedeutung hat; V Wasserstoff oder ein Alkylrest mit 1 bis 4 C-Atomen, der durch Carboxy- oder Sulfogruppen, Alkoxygruppen mit 1 oder 2 C-Atomen, Halogen oder Hydroxy substituiert sein kann; oder ein Rest

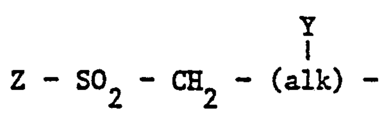

worin Z, alk und Y die angegebenen Bedeutungen haben; $R_1$ Wasserstoff oder $C_{1-6}$-Alkyl; alk′ unabhängig voneinander Polymethylenreste mit 2 bis 6 C-Atomen oder deren verzweigte Isomere; n = 1 oder 2, m = 1 bis 6, p = 1 bis 6 und q = 1 bis 6 ist; wobei falls U —$SO_2$— ist, V nicht Wasserstoff sein darf; und der Benzol- bzw. Naphthalinrest A′ weitere Substituenten enthalten kann.

2. Reaktivfarbstoffe der Formel

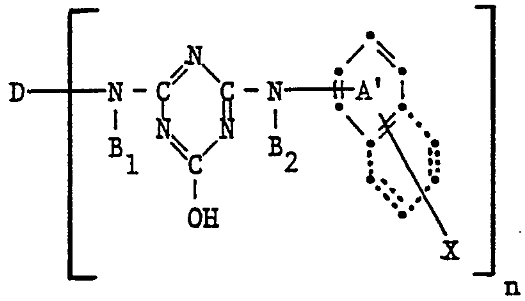

(6) ,

worin $B_1$, $B_2$ und n die in Anspruch 1 angegebene Bedeutung haben; X ein Rest der Formel

$$—SO_2—Z \quad (2)$$

oder

$$—N(R_1)SO_2—Z \quad (2a);$$

und $R_1$ Wasserstoff oder $C_{1-6}$-Alkyl ist; Z die in Anspruch 1 angegebene Bedeutung hat, und der Benzol- bzw. Naphthalinrest A' ausser X weitere Substituenten enthalten kann.

3. Reaktivfarbstoffe gemäss Anspruch 1, der Formel

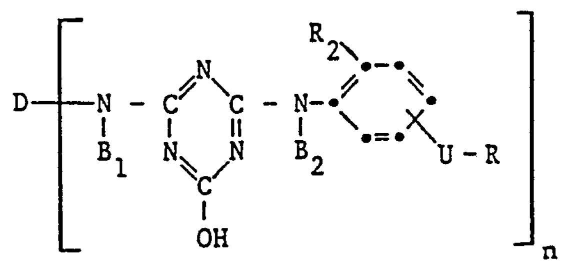

(8) ,

worin $R_2$ Wasserstoff, $C_{1-4}$-Alkyl, $C_{1-4}$-Alkoxy, Halogen, Hydroxy, Carboxy oder Sulfo ist; und D, $B_1$, $B_2$, U, R und n die in Anspruch 1 angegebenen Bedeutungen haben.

4. Reaktivfarbstoffe gemäss Anspruch 3, worin D der Rest eines Mono- oder Disazofarbstoffes ist.

5. Reaktivfarbstoffe gemäss Anspruch 3, worin D der Rest eines Metallkomplexazo- oder Formazanfarbstoffes ist.

6. Reaktivfarbstoffe gemäss Anspruch 3, worin D der Rest eines Anthrachinonfarbstoffes ist.

7. Reaktivfarbstoffe gemäss Anspruch 3, worin D der Rest eines Phthalocyaninfarbstoffes ist.

8. Reaktivfarbstoffe gemäss Anspruch 5, worin D der Rest eines 1:1 Kupferkomplexazofarbstoffes der Benzol- oder Naphthalinreihe ist, und das Kupferatom an je eine metallisierbare Gruppe beidseitig in ortho-Stellung zur Azobrücke gebunden ist.

9. Reaktivfarbstoffe gemäss Anspruch 4, worin D ein Mono- oder Disazofarbstoffrest der Formel

$$D_1—N=N—(M—N=N)_q—K— \quad (9a),$$

$$—D_1—N=N—(M—N=N)_q—K \quad (9b),$$

$$\text{oder } —D_1—N=N—(M—N=N)_q—K— \quad (9c),$$

oder eines davon abgeleiteten Metallkomplexes; $D_1$ der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe ist, wobei $D_1$, M und K Hydroxy-, Amino-, Methyl-, Aethyl-, Methoxy- oder Aethoxygruppen, Alkanoylaminogruppen mit 2 bis 4 C-Atomen, Benzoylaminogruppen oder Halogenatome tragen können; q = 0 oder 1 ist; und $D_1$, M und K zusammenmindestens zwei Sulfogruppen, vorzugsweise drei oder vier Sulfogruppen, enthalten.

10. Reaktivfarbstoffe gemäss Anspruch 4, worin D ein Disazofarbstoffrest der Formel

$$D_1—N=N—K—N=N—D_2— \quad (10a),$$

$$\text{oder } —D_1—N=N—K—N=N—D_2— \quad (10b),$$

$D_1$ und $D_2$ unabhängig voneinander der Rest einer Diazokomponente der Benzol- oder Naphthalinreihe, und K der Rest einer Kupplungskomponente der Naphthalinreihe ist; wobei $D_1$, $D_2$ und K Hydroxy-, Amino, Methyl-, Aethyl-, Methoxy- oder Aethoxygruppen, Alkanoylaminogruppen mit 2 bis 4 C-Atomen, Benzoylaminogruppen oder Halogenatome tragen können; und $D_1$, $D_2$ und K zusammen mindestens zwei Sulfogruppen, vorzugsweise drei oder vier Sulfogruppen enthalten.

11. Reaktivfarbstoffe gemäss Anspruch 6, worin D der Rest eines Anthrachinonfarbstoffes der Formel

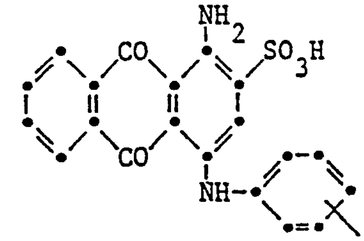

(11)

ist; wobei der Anthrachinonkern durch eine weitere Sulfogruppe, und der Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 sulfo-Gruppen enthält.

12. Reaktivfarbstoffe gemäss Anspruch 7, worin D der Rest eines Phthalocyaninfarbstoffes der Formel

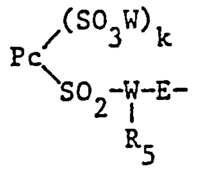

(12) ,

Pc der Rest eines Kupfer- oder Nickelphthalocyanins; W —OH und/oder —$NR_3R_4$; $R_3$ und $R_4$ unabhängig voneinander Wasserstoff oder Alkyl mit 1 bis 4 Kohlenstoffatomen, das durch Hydroxy oder Sulfo substituiert sein kann; $R_5$ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Aethylenrest; und k = 1 bis 3 ist.

13. Reaktivfarbstoffe gemäss Anspruch 3, der Formel

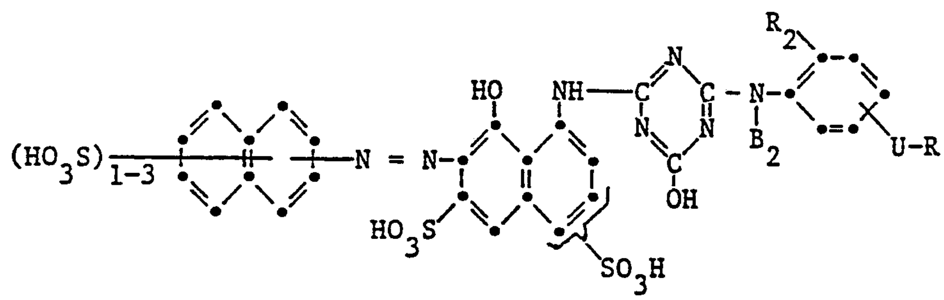

(16) ,

worin $B_2$, U, R und $R_2$ die für Anspruch 3 geltenden Bedeutungen haben.

14. Reaktivfarbstoffe gemäss Anspruch 3, der Formel

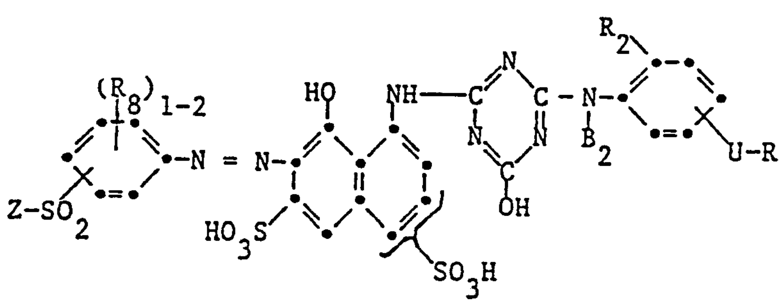

(17) ,

worin $R_8$ für 1 bis 2 Substituenten aus der Gruppe Wasserstoff, $C_{1-4}$-Alkyl, $C_{1-4}$-Alkoxy, Halogen, Carboxy und Sulfo steht; $B_2$, U, R und $R_2$ die für Anspruch 3 geltenden Bedeutungen haben, und Z β-Sulfatoäthyl, β-Thiosulfatoäthyl, β-Phosphatoäthyl, β-Acetoxyäthyl, β-Halogenäthyl oder Vinyl ist.

15. Reaktivfarbstoffe gemäss Anspruch 3, der Formel

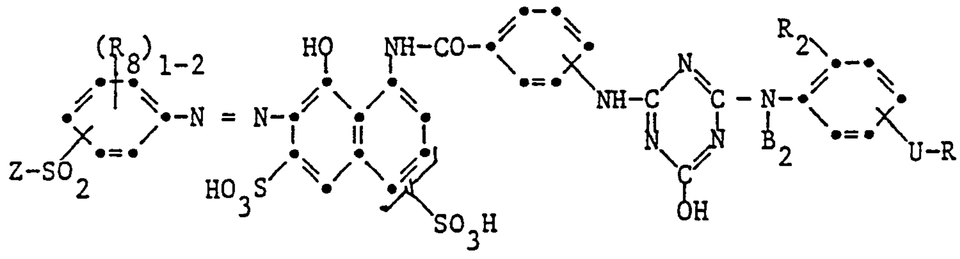

(18) ,

worin $R_8$ für 1 bis 2 Substituenten aus der Gruppe Wasserstoff, $C_{1-4}$-Alkyl, $C_{1-4}$-Alkoxy, Halogen, Carboxy und Sulfo steht; $B_2$, U, R und $R_2$ die für Anspruch 3 geltenden Bedeutungen haben, und Z β-Sulfatoäthyl, β-Thiosulfatoäthyl, β-Phosphatoäthyl, β-Acetoxyäthyl, β-Halogenäthyl oder Vinyl ist.

16. Reaktiverfarstoffe gemäss Anspruch 3, der Formel

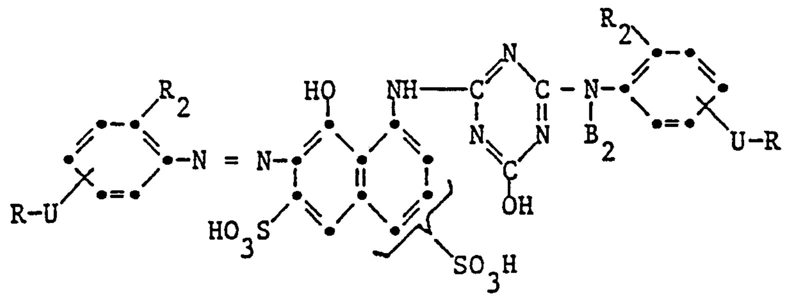

(19) ,

worin $B_2$, U, R und $R_2$ die für Anspruch 3 geltenden Bedeutungen haben.

17. Reaktivfarbstoffe gemäss Anspruch 3, der Formel

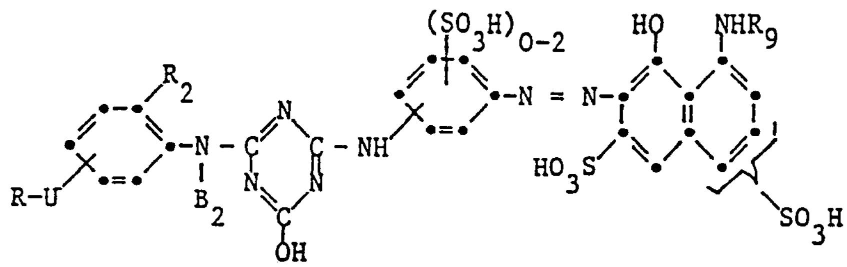

(20) ,

worin $R_0$ Wasserstoff, $C_{1-4}$-Alkanoyl oder Benzoyl ist; und $B_2$, U, R und $R_2$ die für Anspruch 3 geltenden Bedeutungen haben.

18. Reaktivfarbstoffe gemäss Anspruch 1, worin —U—R ein Rest der Formel

$$—CO—NH(CH_2)_2SO_2(CH_2)_2Cl$$

ist.

19. Reaktivfarbstoffe gemäss Anspruch 2, der Formel

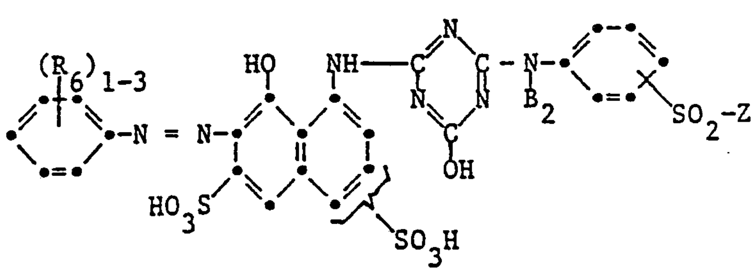

(26) ,

worin $R_6$ für 1 bis 3 Substituenten aus der Gruppe $C_{1-4}$-Alkyl, $C_{1-4}$-Alkoxy, Halogen, Carboxy und Sulfo steht; und $B_2$ und Z die für Anspruch 2 geltenden Bedeutungen haben.

20. Reaktivfarbstoffe gemäss Anspruch 2, der Formel

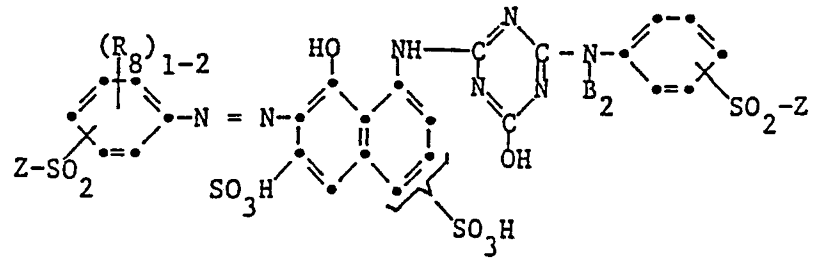

(27) ,

worin $R_8$ für 1 bis 2 Substituenten aus der Gruppe Wasserstoff, $C_{1-4}$-Alkyl, $C_{1-4}$-Alkoxy, Halogen, Carboxy und Sulfo steht; und $B_2$ und Z die für Anspruch 2 geltenden Bedeutungen haben.

21. Reaktivfarbstoffe gemäss Anspruch 2, der Formel

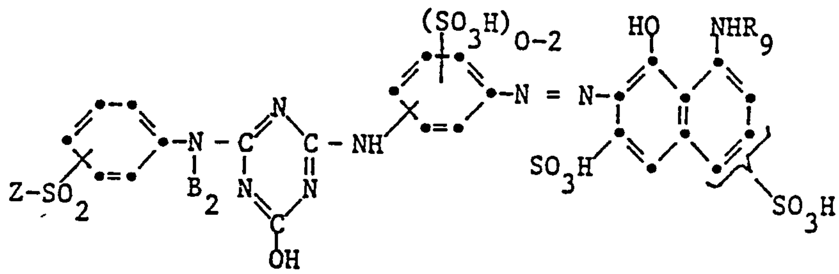

(28) ,

worin $R_9$ Wasserstoff, $C_{1-4}$-Alkyl oder Benzoyl ist; und $B_2$ und Z die für Anspruch 2 geltenden Bedeutungen haben.

22. Reaktivfarbstoffe gemäss Anspruch 2, worin Z die β-Sulfatoäthyl-, β-Chloräthyl- oder Vinylgruppe ist.

23. Verfarhen zur Herstellung von Reaktivfarbstoffen der Formel (4) und (6), dadurch gekennzeichnet, dass man einen organischen Farbstoff der Formel

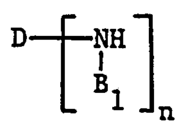

(29)

oder ein Farbstoffvorprodukt, mindestens ein Aequivalent eines s-Triazins der Formel

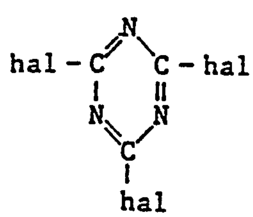

(30) ,

und mindestens ein Aequivalent eines Amind der Formel

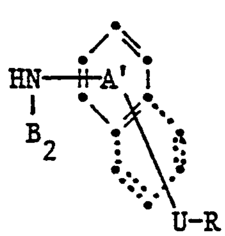

oder

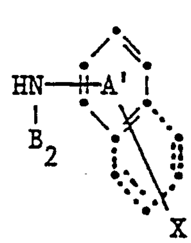

in beliebiger Reihenfolge miteinander umsetzt, wobei A', D, $B_1$, $B_2$, R, U, X und n die in den Ansprüchen 1 und 2 angegebenen Bedeutungen haben, und hal ein Halogenatom ist, und das nicht umgesetzte Halogenatom am Triazinring mittels Verseifung durch eine Hydroxygruppe ersetzt, oder, im Falle der Verwendung von Farbstoffvorprodukten, die erhaltenen Zwischenprodukte in die gewünschten Monohalogentriazinfarbstoffe überführt und das Halogenatom am Triazinring mittels Verseifung durch

eine Hydroxygruppe ersetzt, und gegebenenfalls eine weitere Umwandlungsreaktion anschliesst.

24. Verfahren gemäss Anspruch 23, dadurch gekennzeichnet, dass man einen Farbstoff der Formel

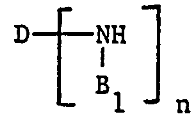

(29)

zunächst mit einem s-Triazin der Formel

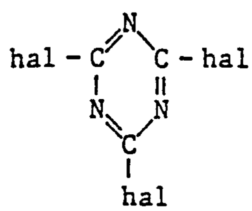

(30)

kondensiert, und die erhaltene Verbindung der Formel

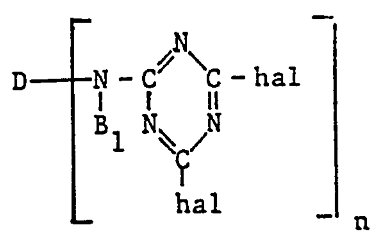

(32) ,

anschliessend mit einem Amin der Formel

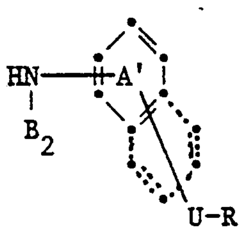

oder

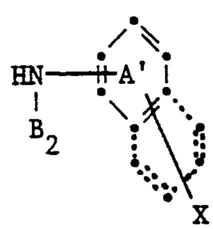

kondensiert und zuletzt das dritte Halogenatom am Triazinring durch eine Hydroxygruppe ersetzt.

25. Verfahren gemäss Anspruch 23, dadurch gekennzeichnet, dass man eine Komponente des Farbstoffs der Formel (1), die einen Rest der Formel

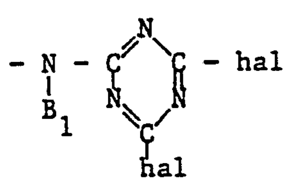

(33)

enthält, worin $B_1$ und hal die in Anspruch 23 angegebenen Bedeutungen haben, mit einer zur Herstellung des Farbstoffs benötigten zweiten Komponente, die gegebenenfalls einen Rest der Formel (33) enthält, umsetzt, und den so erhaltenen Farbstoff der Formel

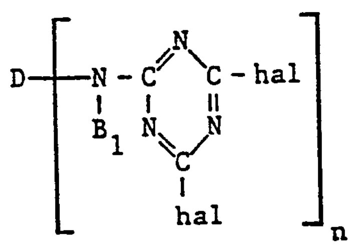

(32)

mit einem Amin der Formel

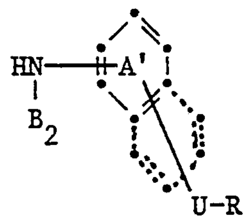

oder

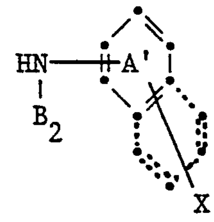

kondensiert, und das dritted Halogenatom am Triazinring durch eine Hydroxygruppe ersetzt.

26. Verwendung der Reaktivfarbstoffe gemäss Anspruch 1 oder 2, zum Färben oder Bedrucken von cellulosehaltigen Fasermaterialien.

27. Verwendung gemäss Anspruch 26, zum Färben oder Bedrucken von Baumwolle.

**Revendications**

1. Colorants réactifs de formule

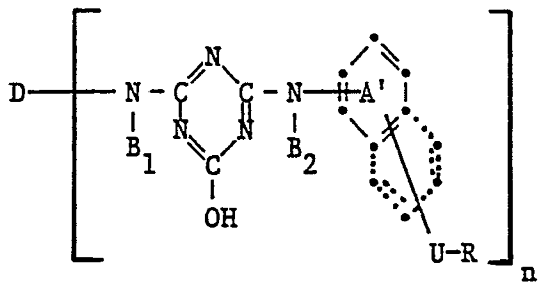

(4) ,

dans laquelle D est le reste d'un colorant monoazoïque, polyazoïque, azoïque à complexe métallique, anthraquinone, phtalocyanine, formazan, azométhine, dioxazine, phénazine, stilbène, triphénylméthane, xanthène, thiaxanthone, nitroaryle, naphtoquinone, pyrènequinone ou pérylènetètracarbimide; $B_1$ et $B_2$, indépendamment l'un de l'autre, représentent un atome d'hydrogène ou un alkyle comportant de 1 à 4 atomes de carbone, qui peut être substitué par carboxy, sulfo, cyano ou hydroxy; U est —CO— ou —$SO_2$—; R est un reste de formule

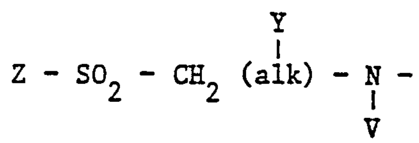

(5a) ,

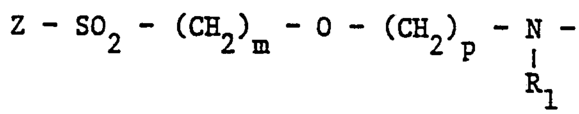

(5b) ,

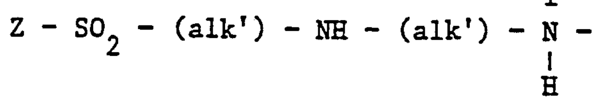

(5c)

ou

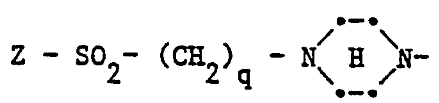

(5d)

Z est β-sulfatoéthyle, β-thiosulfatoéthyle, β-phosphatoéthyle, β-acétoxyéthyle, β-halogénoéthyle ou vinyle; alk est un reste polyméthylène comportant de 1 à 6 atomes de carbone ou ses isomères ramifiés; Y est hydrogène, chlore, brome, fluor, hydroxy, sulfato, acyloxy comportant de 1 à 4 atomes de carbone, cyano, carboxy, alcoxycarbonyle comportant de 1 à 5 atomes de carbone, carbamoyle ou un reste —$SO_2$—Z, où Z a la définition donnée ci-dessus; V est hydrogène ou un reste alkyle comportant de 1 à 4 atomes de carbone, qui peut être substitué par des groupes carboxy ou sulfo, des groupes alcoxy comportant 1 ou 2 atomes de carbone, halogène ou hydroxy, ou bien V est un reste

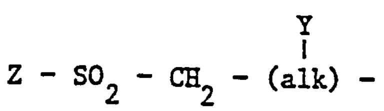

dans lequel Z, alk et Y ont les définitions indiquées; $R_1$ est hydrogène ou alkyle en $C_{1-6}$; alk', indépendamment l'un de l'autre, représentent des restes polyméthylène comportant de 2 à 6 atomes de carbone ou leurs isomères ramifiés; n = 1 ou 2, m = 1 à 6, p = 1 à 6 et q = 1 à 6; avec le restriction que, lorsque U est $—SO_2—$, V ne peut être hydrogène; et le reste benzène ou naphtalène A' peut renfermer d'autres substituants.

2. Colorants réactifs de formule

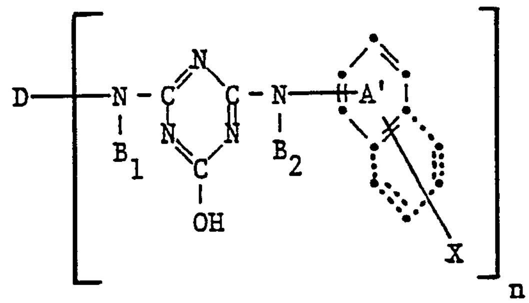

(6) ,

dans laquelle $B_1$, $B_2$ et n ont les définitions indiquées dans la revendication 1; X est un reste de formule

$$—SO_2—Z \quad (2)$$

ou

$$—N(R_1)SO_2—Z \quad (2a);$$

et $R_1$ est hydrogène ou alkyle en $C_{1-6}$; Z a la définition indiquée dans la revendication 1, et le reste benzène ou naphtalène A' peut, en plus de X, renfermer d'autres substituants.

3. Colorants réactifs selon la revendication 1, de formule

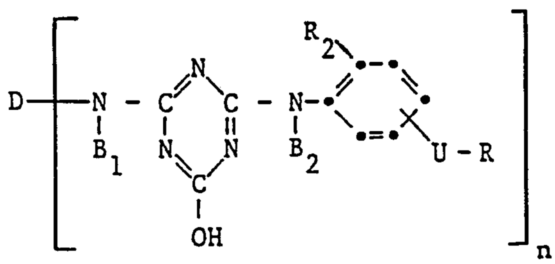

(8) ,

dans laquelle $R_2$ est hydrogène, alkyle en $C_{1-4}$, alcoxy en $C_{1-4}$, halogène, hydroxy, carboxy ou sulfo; et D, $B_1$, $B_2$, U, R est n ont les définitions indiquées dans la revendication 1.

4. Colorants réactifs selon la revendication 3, dans lesquels D est le reste d'un colorant mono- ou disazoïque.

5. Colorants réactifs selon la revendication 3, dans lesquels D est le reste d'un complexe métal-colorant azoïque ou d'un colorant formazan.

6. Colorants réactifs selon la revendication 3, dans lesquels D est le reste d'un colorant anthraquinone.

7. Colorants réactifs selon la revendication 3, dans lesquels D est le reste d'un colorant phtalocyanine.

8. Colorants réactifs selon la revendication 5, dans lesquels D est le reste d'un complex 1:1 cuivre-colorant azoïque de la série du benzène ou du naphtalène, et l'atome de cuivre est fixé à chaque fois un groupe métallable en position ortho de part et d'autre du pont azo.

9. Colorants réactifs selon la revendication 4, dans lesquels D est un reste de colorant mono- ou disazoïque de formule

$$D_1—N=N—(M—N=N)_q—K— \quad (9a),$$

$$—D_1—N=N—(M—N=N)_q—K \quad (9b),$$

$$\text{ou } —D_1—N=N—(M—N=N)_q—K— \quad (9c),$$

ou d'un complexe métallique dérivé de celui-ci; $D_1$ est le reste d'un composant diazo de la série du benzène ou du naphtalène, M est le reste d'un composant central de la série du benzène ou du naphtalène, et K est le reste d'un copulant de la série du benzène, du naphtalène, de la pyrazolone, de la 6-hydroxypyridone-(2) ou des arylamides de l'acide acétylacétique, $D_1$, M et K pouvant porter des groupes hydroxy, amino, méthyle, éthyle, méthoxy ou éthoxy, des groupes alcanoylamino comportant de 2 à atomes de carbone, des groupes benzoylamino ou des atomes d'halogène; q = 0 ou 1, et $D_1$, M et K renferment ensemble au moins deux groupes sulfo, de préférence trois ou quatre groupes sulfo.

10. Colorants réactifs selon la revendication 4, dans lesquels D est le reste de colorant disazoïque de formule

$$D_1{-}N{=}N{-}K{-}N{=}N{-}D_2{-} \qquad (10a),$$

$$\text{ou } {-}D_1{-}N{=}N{-}K{-}N{=}N{-}D_2{-} \qquad (10b),$$

$D_1$ et $D_2$, indépendamment l'un de l'autre, sont les restes d'un composant diazo de la série du benzène ou du naphtalène, et K est le reste d'un copulant de la série du naphtalène, $D_1$, $D_2$ et K pouvant porter des groupes hydroxy, amino, méthyle, éthyle, méthoxy ou éthoxy, des groupes alcanoylamino comportant de 2 à 4 atomes de carbone, des groupes benzoylamino ou des atomes d'halogène; et $D_1$, $D_2$ et K renferment ensemble au moins deux groupes sulfo, de préférence trois ou quatre groupes sulfo.

11. Colorants réactifs selon la revendication 6, dans lesquels D est le reste d'un colorant anthraquinone de formule

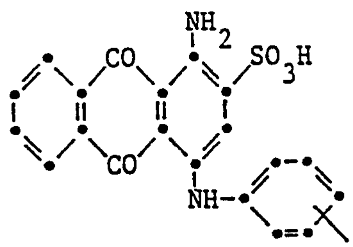

(11)

le noyau anthraquinone pouvant être substitué par un autre groupe sulfo et le reste phényle pouvant être substitué par alkyle en $C_{1-6}$, alcoxy en $C_{1-6}$, halogène, carboxy ou sulfo, et le colorant contenant de préférence au moins 2 groupes sulfo.

12. Colorants réactifs selon la revendication 7, dans lesquels D est le reste d'un colorant phtalocyanine des formule

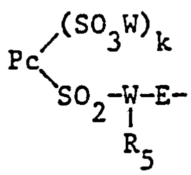

(12) ,

dans laquelle Pc est le reste d'un phtalocyanine du cuivre ou du nickel; W est —OH et/ou —$NR_3R_4$; $R_3$ et $R_4$ sont, indépendamment l'un de l'autre, hydrogène ou alkyle en $C_{1-4}$, qui peut être substitué par hydroxy ou sulfo; $R_5$ est hydrogène ou alkyle en $C_{1-4}$; E est un reste phénylène, qui peut être substitué par alkyle en $C_{1-4}$, halogène, carboxy ou sulfo, ou bien un reste alkylène en $C_2$—$C_6$, de préférence un reste sulfophéhylène ou éthylène; et k = 1 à 3.

13. Colorants réactifs selon la revendication 3, de formule

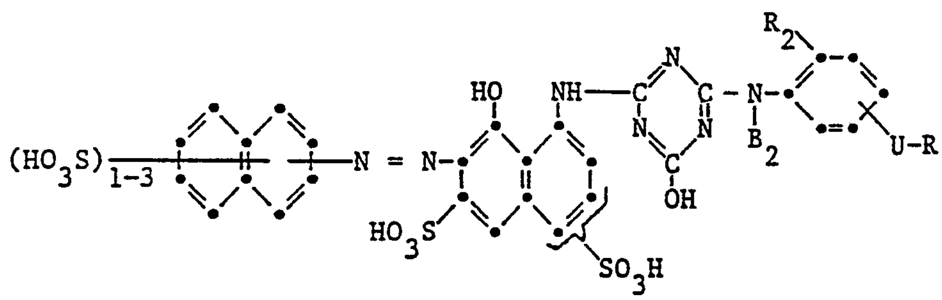

(16) ,

dans laquelle $B_2$, U, R et $R_2$ ont les définitions de la revendication 3.

14. Colorants réactifs selon la revendication 3, de formule

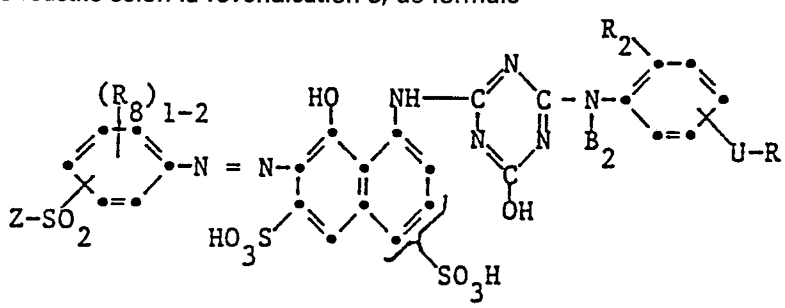

(17) ,

dans laquelle $R_8$ représente 1 ou 2 substituants choisis parmi; hydrogène, alkyle en $C_{1-4}$, alcoxy en $C_{1-4}$, halogène, carboxy et sulfo; $B_2$, U, R et $R_2$ ont les définitions de la revendication 3, et Z est β-sulfatoéthyle, β-thiosulfatoéthyle, β-phosphatoéthyle, β-acétoxyéthyle, β-halogénoéthyle ou vinyle.

15. Colorants réactifs selon la revendication 3, de formule

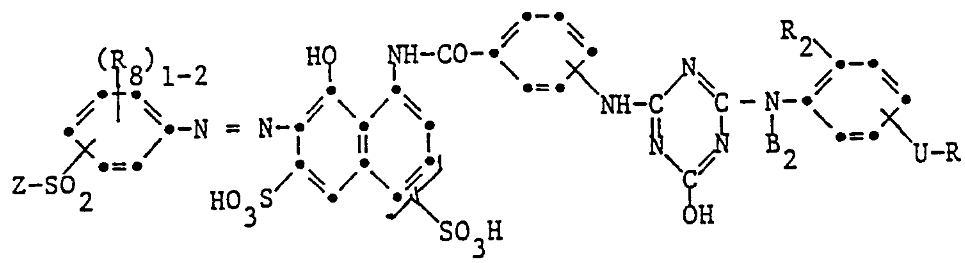

(18) ,

dans laquelle $R_8$ représente 1 ou 2 substituants choisis parmi; hydrogène, alkyle en $C_{1-4}$, alcoxy en $C_{1-4}$, halogène, carboxy et sulfo; $B_2$, U, R et $R_2$ ont les définitions de la revendication 3, et Z est β-sulfatoéthyle, β-thiosulfatoéthyle, β-phosphatoéthyle, β-acétoxyéthyle, β-halogénoéthyle ou vinyle.

16. Colorants réactifs selon la revendication 3, de formule

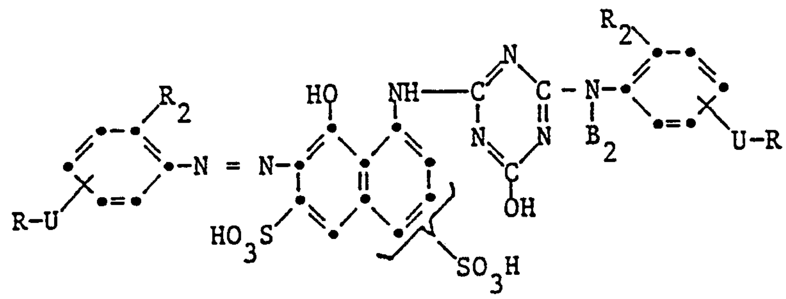

(19) ,

dans laquelle $B_2$, U, R et $R_2$ ont les définitions de la revendication 3.

17. Colorants réactifs selon la revendication 3, de formule

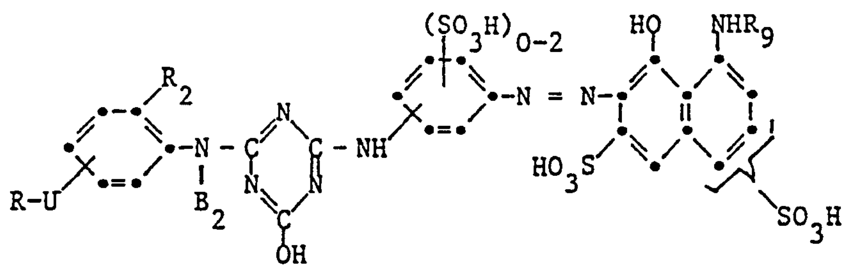

(20) ,

dans laquelle $R_9$ est hydrogène, alcanoyle en $C_{1-4}$ ou benzoyle; et $B_2$, U, R et $R_2$ ont les définitions de la revendication 3.

18. Colorants réactifs selon la revendication 1, dans lesquels —U—R est un reste de formule

$$—CO—NH(CH_2)_2SO_2(CH_2)_2Cl$$

19. Colorants réactifs selon la revendication 2, de formule

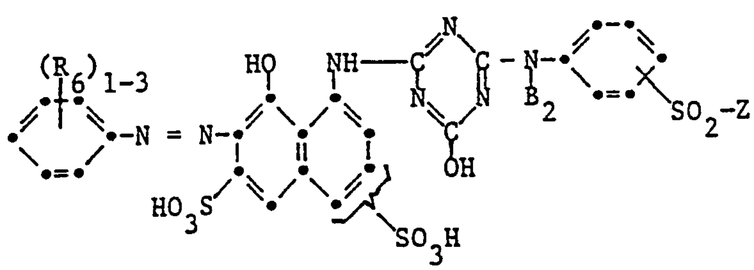

(26) ,

dans laquelle $R_6$ représente 1 à 3 substituants choisis parmi; alkyle en $C_{1-4}$, alcoxy en $C_{1-4}$, halogène, carboxy et sulfo; et $B_2$ et Z ont les définitions données pour la revendication 2.

20. Colorants réactifs selon la revendication 2, de formule

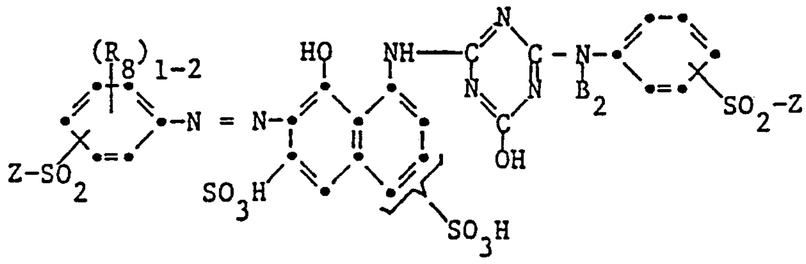

(27) ,

dans laquelle $R_8$ représente 1 à 2 substituants choisis parmi: hydrogène, alkyle en $C_{1-4}$, alcoxy en $C_{1-4}$, halogène, carboxy et sulfo; et $B_2$ et Z ont les définitions données pour la revendication 2.

21. Colorants réactifs selon la revendication 2, de formule

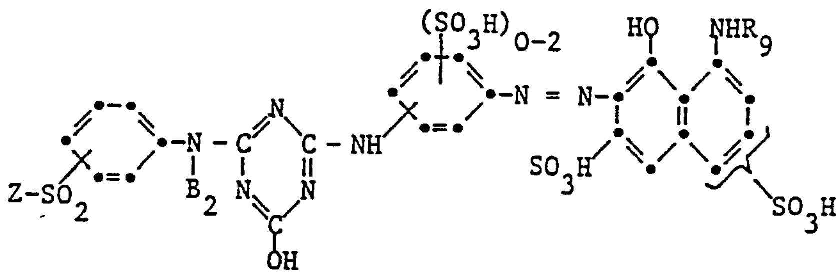

(28) ,

dans laquelle $R_9$ est hydrogène, alkyle en $C_{1-4}$ ou benzoyle; et $B_2$ et Z ont les définitions données pour la revendication 2.

22. Colorants réactifs selon la revendication 2, dans lesquels Z est un groupe β-sulfatoéthyle, β-chloroéthyle ou vinyle.

23. Procédé de préparation de colorants réactifs de formules (4) et (6), caractérisé en ce que l'on fait réagir ensemble, selon un ordre quelconque, un colorant organique de formule

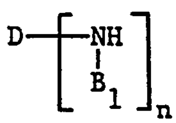

(29)

ou un précurseur de colorant, au moins un équivalent d'une s-triazine de formule

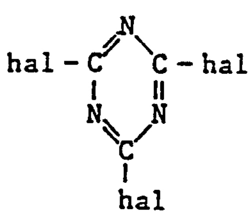

(30) ,

et au moins un équivalent d'une amine de formule

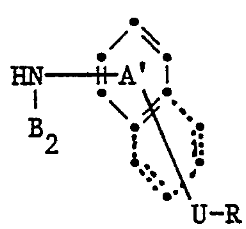

ou

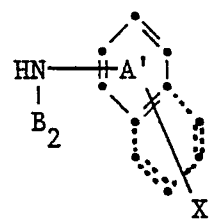

formules dans lesquelles A', D, $B_1$, $B_2$, R, U, X et n ont les définitions indiquées dans les revendications 1 et 2, et hal est un atome d'halogène, et que l'on remplace par un groupe hydroxy, au moyen d'une saponification, l'atome d'halogène non modifié du cycle triazinique, ou bien, dans le cas où l'on utilise de précurseurs de colorants, que l'on transforme les produits intermédiaires obtenus en les colorants monohalogénotriaziniques souhaités et que l'on remplace par un groupe hydroxy, au moyen d'une

saponification, l'atome d'halogène du cycle triazinique, et éventuellement que l'on effectue ensuite une autre réaction de transformation.

24. Procédé selon la revendication 23, caractérisé en ce que l'on condense d'abord un colorant de formule

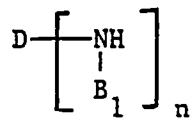

(29)

avec un s-triazine de formule

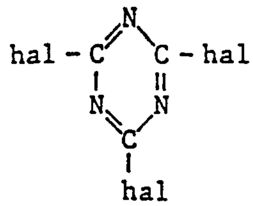

(30)

et que l'on condense ensuite le composé obtenu, de formule

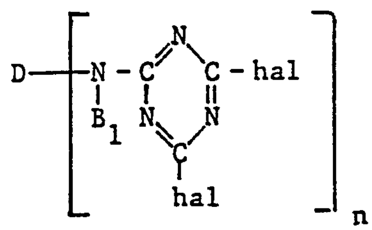

(32) ,

avec une amine de formule

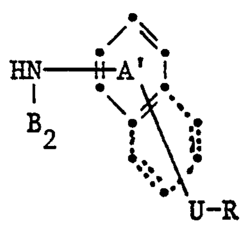

ou

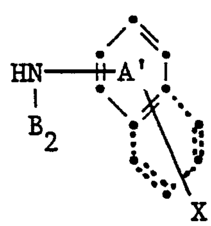

et que l'on remplace finalement le troisième atome d'halogène du cycle triazinique par un groupe hydroxy.

25. Procédé selon la revendication 23, caractérisé en ce que l'on fait réagir un composant du colorant de formule (1), qui contient un reste de formule

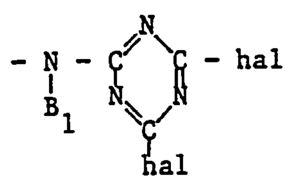

(33)

dans laquelle $B_1$ et hal ont les définitions données dans la revendication 23, avec un deuxième composant nécessaire à la fabrication du colorant, composant qui renferme éventuellement un reste de formule (33), et que l'on condense le colorant ainsi obtenu, de formule

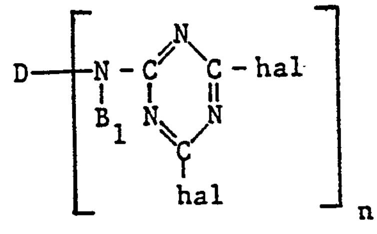

(32) ,

avec un amine de formule

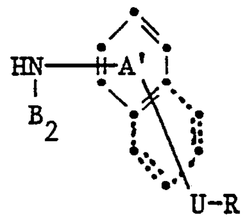

ou

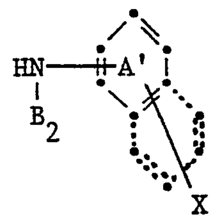

et que l'on remplace le troisième atome d'halogène du cycle triazinique par un groupe hydroxy.

26. Emploi des colorants réactifs selon la revendication 1 ou 2, pour la teinture ou l'impression de matériaux fibreux contenant de le cellulose.

27. Emploi selon la revendication 26, pour la teniture ou l'impression du coton.

## Claims

1. A reactive dye of the formula

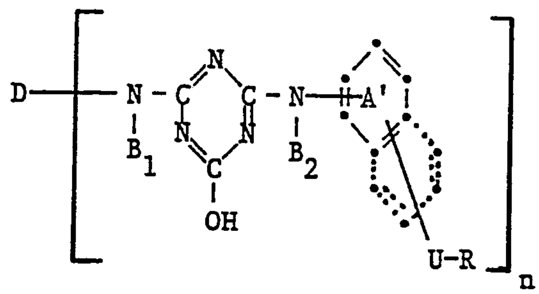

(4) ,

in which D is the radical of a monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone, or perylenetetracarbimide dye; $B_1$ and $B_2$ independently of one another are hydrogen or alkyl which has 1 to 4 carbon atoms and can be substituted by carboxyl, sulfo, cyano or hydroxyl; U is —CO— or —$SO_2$—; R is a radical of the formula

$$Z - SO_2 - CH_2 \overset{Y}{\overset{|}{(alk)}} - \underset{V}{\underset{|}{N}} - \quad (5a) ,$$

$$Z - SO_2 - (CH_2)_m - O - (CH_2)_p - \underset{R_1}{\underset{|}{N}} - \quad (5b) ,$$

$$Z - SO_2 - (alk') - NH - (alk') - \underset{H}{\underset{|}{N}} - \quad (5c)$$

or

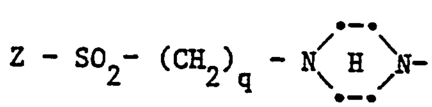

(5d)

Z is β-sulfatoethyl, β-thiosulfatoethyl, β-phosphatoethyl, β-acetoxyethyl, β-halogenoethyl or vinyl; alk is a polymethylene radical having 1 to 6 C atoms or branched isomers thereof; Y is hydrogen, chlorine, bromine, fluorine, hydroxyl, sulfato, acyloxy having 1 to 4 C atoms, cyano, carboxyl, alkoxycarbonyl having 1 to 5 C atoms, carbamoyl or a radical —$SO_2$—Z, in which Z is as defined above; V is hydrogen or an alkyl radical which has 1 to 4 C atoms and can be substituted by carboxyl or sulfo groups, alkoxy groups having 1 to 2 C atoms, halogen or hydroxyl; or V is a radical

$$Z - SO_2 - CH_2 - \overset{Y}{\overset{|}{(alk)}} -$$

in which Z, alk and Y are as defined; $R_1$ is hydrogen or $C_{1-6}$alkyl; the alk's indepedently of one another are polymethylene radicals having 2 to 6 C atoms or branched isomers thereof; n = 1 or 2, m = 1 to 6, p = 1 to 6

and q = 1 to 6; and, if U is —$SO_2$—, V must not be hydrogen; and the benzene and naphthalene radical A' can contain further substituents.

2. A reactive dye of the formula

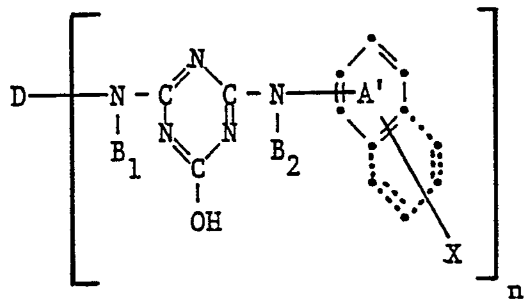

(6) ,

in which $B_1$, $B_2$ and n are as defined in claim 1; X is a radical of the formula

$$-SO_2-Z \qquad (2)$$

or

$$-N(R_1)SO_2-Z \qquad (2a);$$

and $R_1$ is hydrogen or $C_{1-6}$alkyl; Z is as defined under claim 1, and the benzene or naphthalene radical A' can contain further substituents besides X.

3. A reactive dye according to claim 1 of the formula

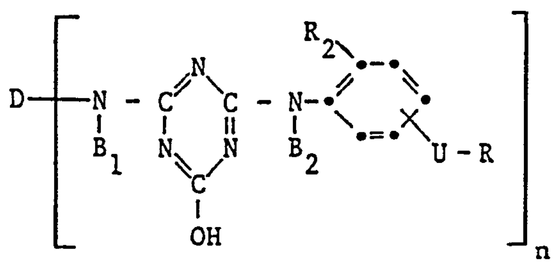

(8) ,

in which $R_2$ is hydrogen, $C_{1-4}$alkyl, $C_{1-6}$alkoxy, halogen, hydroxyl, carboxyl or sulfo; and D, $B_1$, $B_2$, U, R and n are as defined in claim 1.

4. A reactive dye according to claim 3, in which D is the radical of a monoazo or disazo dye.

5. A reactive dye according to claim 3, in which D is the radical of a metal complex azo or formazan dye.

6. A reactive dye according to claim 3, in which D is the radical of a anthraquinone dye.

7. A reactive dye according to claim 3, in which D is the radical of a phthalocyanine dye.

8. A reactive dye according to claim 5, in which D is the radical of a 1:1 copper complex azo dye of the benzene or naphthalene series, and the copper atoms is attached on both sides to a metallizable group each of which is in the ortho-position relative to the azo bridge.

9. A reactive dye according to claim 4, in which D is a monoazo or disazo dye radical of the formula

$$D_1-N=N-(M-N=N)_q-K- \qquad (9a),$$

$$-D_1-N=N-(M-N=N)_q-K \qquad (9b),$$

$$\text{or } -D_1-N=N-(M-N=N)_q-K- \qquad (9c),$$

or a metal complex derived therefrom; $D_1$ is the radical of a diazo component of the benzene or naphtalene series, M is the radical of a central component of the benzene or naphthalene series, and K is the radical of a coupling component of the benzene, naphthalene, pyrazolone, 6-hydroxy-2-pyridone or acetoacetic acid arylamide series, it being possible for $D_1$, M and K to carry hydroxyl, amino, methyl, ethyl, methoxy or ethoxy groups, alkanoylamino groups having 2 to 4 C atoms, benzoylamino groups or halogen atoms; q = 0 or 1; and $D_1$, M and K together contain at least two sulfo groups, preferably three or four sulfo groups.

10. A reactive dye according to claim 4, in which D is a disazo dye radical of the formula

$$D_1-N=N-K-N=N-D_2- \qquad (10a),$$

$$\text{ou } -D_1-N=N-K-N=N-D_2- \qquad (10b),$$

$D_1$ and $D_2$ independently of one another are the radical of a diazo component of the benzene or naphthalene

series, and K is the radical of a coupling component of the naphthalene series, it being possible for $D_1$, $D_2$ and K to carry hydroxyl, amino, methyl, ethyl, methoxy or ethoxy groups, alkanoylamino groups having 2 to 4 C atoms, benzoylamino groups or halogen atoms; and $D_1$, $D_2$, and k together contain at least two sulfo groups, preferably three or four sulfo groups.

11. A reactive dye according to claim 6, in which D is the radical of an anthraquinone dye of the formula

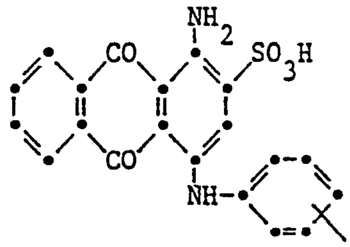

(11)

it being possible for the anthraquinone nucleus to be substituted by a further sulfo group and for the phenyl radical to be substituted by alkyl having 1 to 4 C atoms, alkoxy having 1 to 4 C atoms, halogen, carboxy, or sulfo, and the dye preferably contains at least 2 sulfo groups.

12. A reactive dye according to claim 7, in which D is the radical of a phthalocyanine dye of the formula

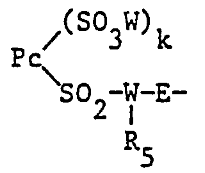

(12) ,

Pc is the radical of a copper or nickel phthalocyanine; W is —OH and/or —$NR_3R_4$; $R_3$ and $R_4$ independently of one another are hydrogen or alkyl which has 1 to 4 carbon atoms and can be substituted by hydroxyl or sulfo; $R_5$ is hydrogen or alkyl having 1 to 4 carbon atoms; E is a phenylene radical which can be substituted by alkyl having 1 to 4 C atoms, halogen, carboxyl or sulfo; or is an alkylene radical having 2 to 6 C atoms, preferably a sulfophenylene or ethylene radical; and K = 1 to 3.

13. A reactive dye according to claim 3, of the formula

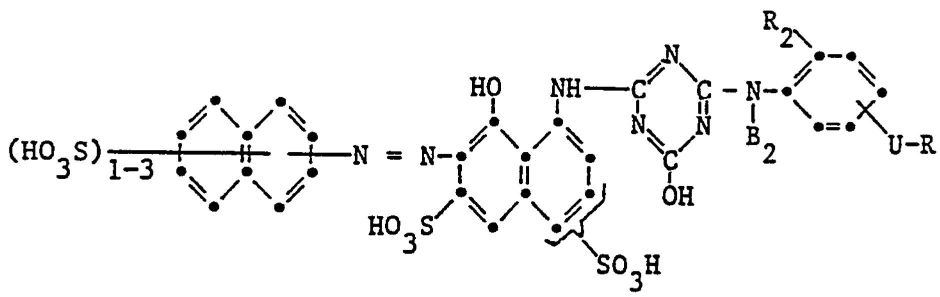

(16) ,

in which $B_2$, U, R and $R_2$ are as defined in claim 3.

14. A reactive dye according to claim 3, of the formula

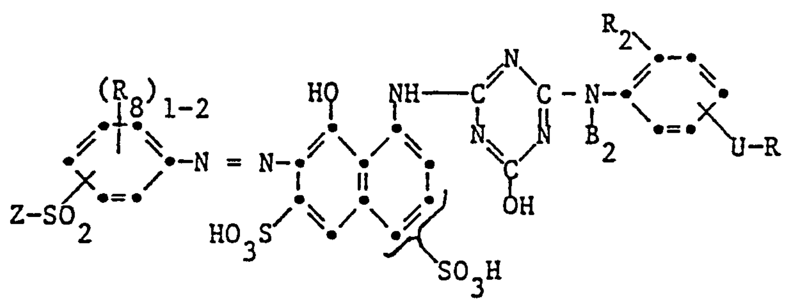

(17) ,

in which $R_8$ is 1 to 2 substituents from the group comprising hydrogen, $C_{1-6}$alkyl, $C_{1-6}$alkoxy, halogen, carboxyl and sulfo; $B_2$, U, R and $R_2$ are as defined in claim 3 and Z is β-sulfatoethyl, β-thiosulfatoethyl, β-phosphatoethyl, β-acetoxyethyl, β-halogenoethyl or vinyl.

15. A reactive dye according to claim 3, of the formula

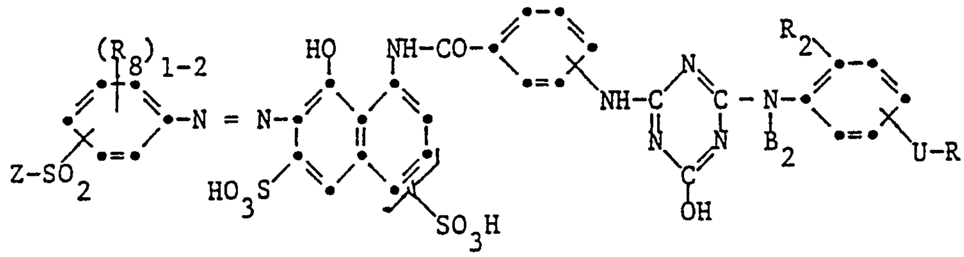 (18) ,

in which $R_8$ is 1 to 2 substituents from the group comprising hydrogen, $C_{1-6}$alkyl, $C_{1-6}$alkoxy, halogen, carboxyl and sulfo; $B_2$, U, R and $R_2$ are as defined in claim 3 and Z is β-sulfatoethyl, β-thiosulfatoethyl, β-phosphatoethyl, β-acetoxyethyl, β-halogenoethyl or vinyl.

16. A reactive dye according to claim 3, of the formula

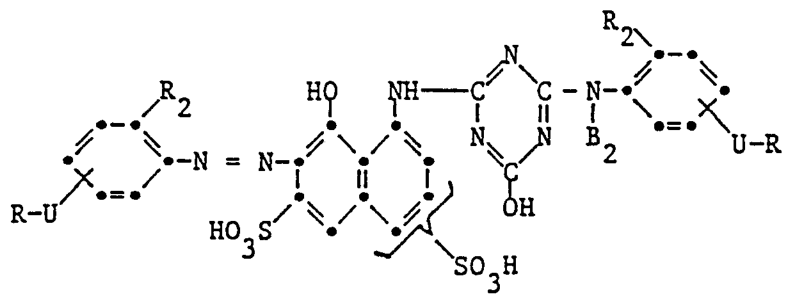 (19) ,

in which $B_2$, U, R and $R_2$ are as defined in claim 3.

17. A reactive dye according to claim 3, of the formula

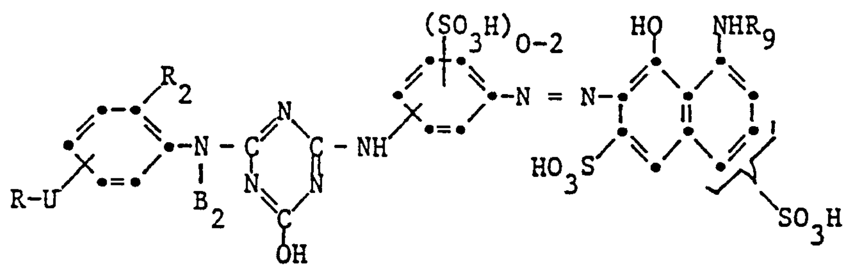 (20) ,

in which $R_9$ is hydrogen, $C_{1-6}$alkanoyl or benzoyl; and $B_2$, U, R and $R_2$ are as defined in claim 3.

18. A reactive dye according to claim 1, in which —U—R is a radical of the formula

$$—CO—NH(CH_2)_2SO_2(CH_2)_2Cl$$

19. A reactive dye according to claim 2, of the formula

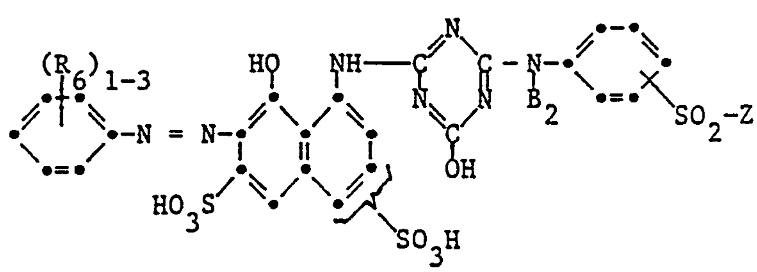 (26) ,

in which $R_6$ is 1 to 3 substituents from the group comprising $C_{1-6}$alkyl, $C_{1-6}$alkoxy, halogen, carboxyl and sulfo; and $B_2$ and Z are as defined in claim 2.

20. A reactive dye according to claim 2, of the formula

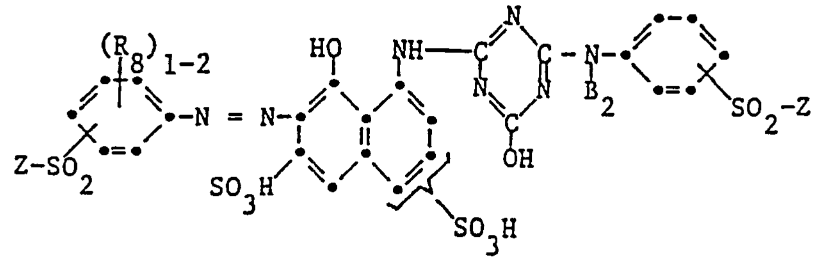

(27) ,

in which $R_8$ is 1 to 2 substituents from the group comprising hydrogen, $C_{1-4}$alkyl, $C_{1-4}$alkoxy, halogen, carboxyl and sulfo; and $B_2$ and Z are as defined in claim 2.

21. A reactive dye according to claim 2, of the formula

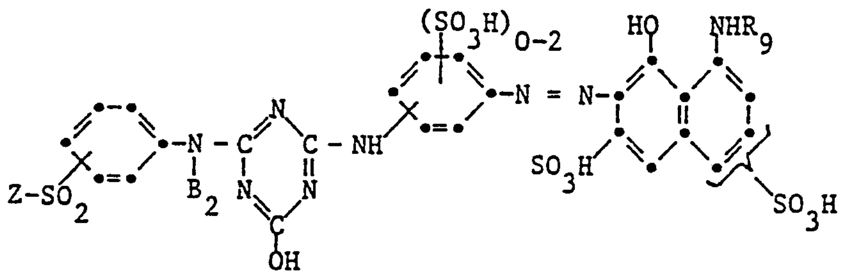

(28) ,

in which $R_9$ is hydrogen, $C_{1-4}$alkyl or benzoyl; and $B_2$ and Z are as defined in claim 2.

22. A reactive dye according to claim 2, in which Z is the β-sulfatoethyl, β-chloroethyl or vinyl group.

23. A process for the preparation of reactive dyes of the formula (4) and (6), which comprises reacting an organic dye of the formula

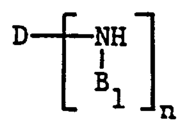

(29)

or a dye precursor, at least one equivalent of an s-triazine of the formula

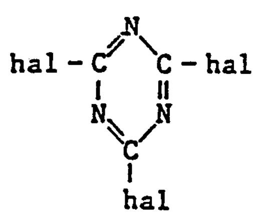

(30) ,

and at least one equivalent of an amine of the formula

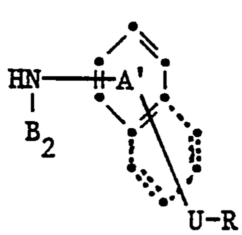

or

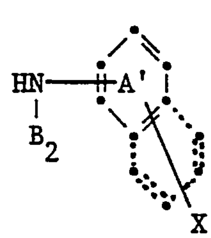

with one another in any desired sequence, A', D, $B_1$, $B_2$, R, U, X and n being as defined in claims 1 and 2, and hal being a halogen atom, and by replacing, by saponification, the unreacted halogen atom on the triazine ring by a hydroxyl group, or, in the event that dye precursors are used, converting the resulting intermediates into the desired monohalogenotriazine dyes and replacing, by saponification, the halogen atom on the triazine ring by a hydroxyl group and, if desired, then carrying out a further conversion reaction.

24. A process according to claim 23, which comprises first subjecting a dye of the formula

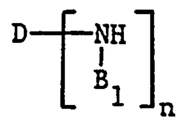

(29)

to a condensation reaction with an s-triazine of the formula

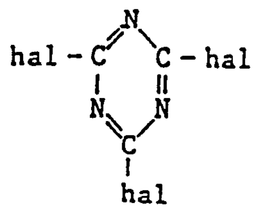

(30) ,

and then subjecting the resulting compound of the formula

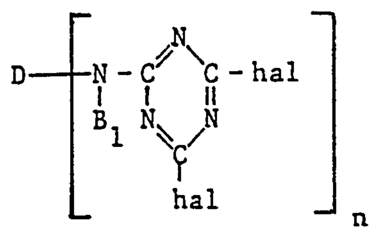

(32) ,

to a condensation reaction with an amine of the formula

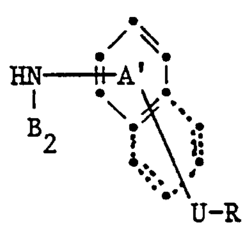

or

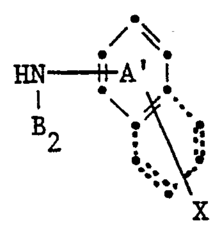

and finally replacing the third halogen atom on the triazine ring by a hydroxyl group.

25. A process according to claim 23, which comprises reacting a component of the dye of the formula (1) containing a radical of the formula

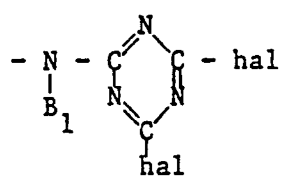

(33)

in which $B_1$ and hal are as defined in claim 23, with a second component which is required for the preparation of the dye and which can contain a radical of the formula (33), and subjecting the dye of the formula

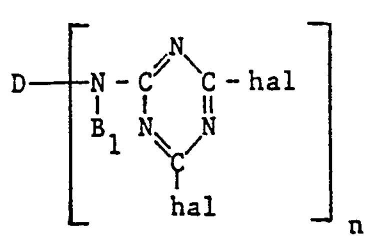

(32) ,

thus obtained to a condensation reaction with an amine of the formula

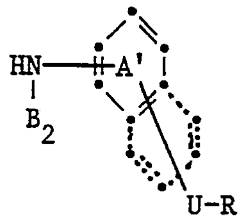 or 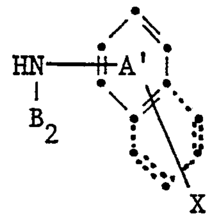

and replacing the third halogen atom on the triazine ring by a hydroxyl group.

26. The use of the reactive dyes according to either of claims 1 and 2 for dyeing or printing fibre materials containing cellulose.

27. Use according to claim 26 for dyeing or printing cotton.